# EUROPEAN PATENT APPLICATION

(11) **EP 4 376 536 A1**
(43) Date of publication of application: **29.05.2024**
(21) Application number: 22851999.7
(22) Date of filing: 27.07.2022
(51) Int. Cl.: H04W 74/08

(54) **DEVICE AND METHOD FOR WIRELESS COMMUNICATION, AND STORAGE MEDIUM**

(30) Priority: 02.08.2021 CN 202110880688
(71) Applicant: Sony Group Corporation, Tokyo 108-0075 (JP)
(72) Inventor: ZHANG, Wenlu, Beijing 100876 (CN); LI, Haojin, Beijing 100028 (CN); FAN, Tingting, Beijing 100028 (CN); CUI, Qimei, Beijing 100876 (CN)
(74) Representative: D Young & Co LLP
(86) International application number: PCT/CN2022/108257
(87) International publication number: WO 2023/011285

(57) **Abstract**

The present disclosure relates to a device and method for wireless communication, and a storage medium. Various embodiments regarding multi-beam sensing and access are described. In an embodiment, an electronic device for wireless communication comprises a processing circuit, the processing circuit being configured to initiate a plurality of listen before talk (LBT) processes on a plurality of beams, wherein for an LBT process of a first beam among the plurality of beams, a first threshold value number of instances of successful clear channel assessment (CCA) detection that have been completed are determined; for an LBT process of at least one other beam among the plurality of beams, a corresponding threshold value number of instances of successful CCA detection that have not yet been completed are determined; and whether to continue to execute at least one instance of additional CCA detection on the first beam is determined.

## Description

### TECHNICAL FIELD

The present disclosure relates generally to wireless communication techniques, and specifically to techniques for multi-beam sensing and access.

### BACKGROUND

The development of wireless communication technology constantly meets the growing demands of people for wireless communication services from various perspectives. Frequency band selection is a crucial aspect in this regard. To cater to high data rates and local high traffic requirements, research and deployment of frequency applications like 24 GHz and even 60 GHz are being carried out. These frequencies, owing to their corresponding wavelengths, are commonly referred to as millimeter-wave frequency bands. Taking 5G new radio (NR) as an example, the frequency bands are divided into frequency range 1 (FR1) and frequency range 2 (FR2). FR1 includes frequency bands below 6GHz, and FR2 includes a range of 24.25 GHz to 52.6 GHz. As for technology like NR that are currently under research and further evolution, the frequency range utilized will expand to a higher frequency range of 60 GHz (for example, 52.6 GHz to 71 GHz).

To adapt to characteristics of millimeter-wave frequency bands, new technologies need to be employed in network devices (such as base stations) and terminals (such as access nodes). These new technologies include, for example, massive multiple-input multiple-output (MIMO), beamforming, multi-beam sensing, as well as their continuous improvement. Listen before talk (LBT) is a typical mechanism used for channel sensing, and this mechanism can also be applied to multi-beam scenarios.

### SUMMARY

A first aspect of the present disclosure relates to an electronic device for wireless communication. According to some embodiments, the electronic device can include a processing circuit. The processing circuit can be configured to: initiate a plurality of listen before talk (LBT) procedures on a plurality of beams; for an LBT procedure on a first beam of the plurality of beams, determine that a first threshold number of successful clear channel assessment (CCA) detections have been completed; for an LBT procedure on at least one other beam of the plurality of beams, determine that a corresponding threshold number of successful CCA detections have not been completed; and determine whether at least one additional CCA detection is to be performed on the first beam.

A second aspect of the present disclosure relates to a method for wireless communication. According to some embodiments, the method includes: initiating a plurality of listen before talk (LBT) procedures on a plurality of beams; for an LBT procedure on a first beam of the plurality of beams, determining that a first threshold number of successful clear channel assessment (CCA) detections have been completed; for an LBT procedure on at least one other beam of the plurality of beams, determining that a corresponding threshold number of successful CCA detections have not been completed; and determining whether at least one additional CCA detection is to be performed on the first beam.

A third aspect of the present disclosure relates to a computer-readable storage medium having executable instructions stored thereon, where the executable instructions, when executed by one or more processors, cause operations of the method according to various embodiments in the present disclosure to be implemented.

A fourth aspect of the present disclosure relates to a computer program product including instructions, where the instructions, when executed by a computer, cause the computer to perform the method according to various embodiments in the present disclosure.

The above summary is provided to summarize some exemplary embodiments in order to provide a basic understanding of the various aspects of the subject matter described herein. Therefore, the above-described features are merely examples and should not be construed as limiting the scope or spirit of the subject matter described herein in any way. Other features, aspects, and advantages of the subject matter described herein will become apparent from the Detailed Description described below in conjunction with the drawings.

### BRIEF DESCRIPTION OF THE DRAWINGS

A better understanding of the present disclosure can be achieved by referring to the detailed description given hereinafter in connection with the accompanying drawings. The same or similar reference numerals are used in the accompanying drawings to denote the same or similar components. The accompanying drawings together with the following detailed description are included in the specification and form a part of the specification, and are used to exemplify the embodiments of the present disclosure and explain the principles and advantages of the present disclosure. where:
FIG. 1 illustrates an example wireless communication system according to an embodiment of the present disclosure.
FIG. 2 is an example timing diagram of an LBT procedure for a single beam according to an embodiment of the present disclosure.
FIG. 3 illustrates an example electronic device for wireless communication according to an embodiment of the present disclosure.
FIG. 4 is an example timing diagram of multi-beam parallel LBT procedures according to an embodiment of the present disclosure.
FIG. 5 illustrates example processing for coordinating multi-beam parallel LBT according to an embodiment of the present disclosure.
FIG. 6 illustrates example processing for determining whether multi-beam SDM transmission conditions are met according to an embodiment of the present disclosure.
FIG. 7 is an example timing diagram of multi-beam parallel LBT operation according to an embodiment of the present disclosure.
FIGS. 8A and FIG. 8B are example timing diagrams of multi-beam parallel LBT operation according to an embodiment of the present disclosure.
FIG. 9 illustrates example processing for performing parallel LBT based on beam grouping according to an embodiment of the present disclosure.
FIG. 10 illustrates an example method for wireless communication according to an embodiment of the present disclosure.
FIG. 11 is an example block diagram of a computer capable of being implemented as a terminal device or network device according to an embodiment of the present disclosure.
FIG. 12 is a block diagram illustrating a first example of a schematic configuration of a gNB to which the technology of the present disclosure can be applied.
FIG. 13 is a block diagram illustrating a second example of a schematic configuration of a gNB to which the technology of the present disclosure can be applied
FIG. 14 is a block diagram illustrating an example of a schematic configuration of an intelligent phone to which the technology of the present disclosure can be applied.
FIG. 15 is a block diagram illustrating an example of a schematic configuration of a car navigation device to which the technology of the present disclosure can be applied.

The embodiments described in the present disclosure are examples only, and may have various modifications and alternative forms. It should be understood that the drawings and detailed description thereof are not intended to limit the solutions to the specific forms disclosed, but to cover all modifications, equivalents, and alternatives falling within the spirit and scope of the claims.

### DESCRIPTION OF EMBODIMENTS

The following describes representative applications of various aspects of the device and method according to the present disclosure. The description of these examples is merely to add context and help to understand the described embodiments. Therefore, it is clear to those skilled in the art that the embodiments described below can be implemented without some or all of the specific details. In other instances, well-known process steps have not been described in detail to avoid unnecessarily obscuring the described embodiments. Other applications are also possible, and the solution of the present disclosure is not limited to these examples.

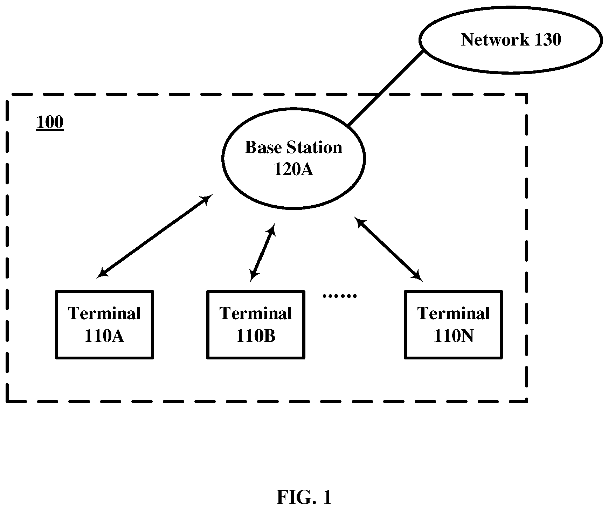

FIG. 1 illustrates an example wireless communication system 100 according to an embodiment of the present disclosure. It should be understood that FIG. 1 illustrates only one of multiple types and possible layouts of wireless communication systems, and features of the present disclosure can be implemented in any one of the various systems as desired.

As shown in FIG. 1, the wireless communication system 100 includes a base station 120A and one or more terminals 110A, 110B to 110N. The base station 120A can communicate with the terminals through a transmission medium. The base station 120A can communicate with a network 130 (for example, a core network of a cellular service provider, a telecommunications network such as a public switched telephone network (PSTN), and/or the Internet). In this way, the base station 120A can facilitate communication between the terminals 110A to 110N and/or between the terminals 110A to 110N and the network 130.

In FIG. 1, a coverage area of the base station 120A can be referred to as a cell. The base station 120A and other similar base stations (not shown) operating in accordance with one or more cellular communications technologies can provide continuous or nearly continuous communications signal coverage to the terminals 110A to 110N and similar devices over a wide geographic area.

In embodiments of the present disclosure, the base station and the terminals can communicate through a licensed spectrum and/or an unlicensed spectrum. Licensed frequency bands and unlicensed frequency bands can comply with industry-standard definitions or comply with regional frequency management regulations. For both licensed and unlicensed frequency bands, the base station can allocate time domain and frequency domain resources for uplink and downlink. Generally, frequency domain resources can be contiguous or non-contiguous subcarriers. Time domain resources can correspond to a specific time period, for example, a specific number of symbols, slots, or subframes.

In embodiments of the present disclosure, communication between the base station and the terminals can use millimeter wave frequency bands, such as FR2 and a frequency range above 60GHz. In the downlink, the base station can communicate with a plurality of terminals through a plurality of beams by using multi-user MIMO (MU-MIMO) to obtain space division multiplexing (SDM) gains. Although only a single base station 120A is shown in FIG. 1, it can be understood that in the uplink, for example, the terminal 110A can also communicate with a plurality of base stations through a plurality of beams by using MU-MIMO, so as to obtain SDM gains.

In embodiments of the present disclosure, the base station and the terminal can perform signaling exchange by using at least one of higher-layer signaling (such as radio resource control (RRC) signaling) and physical layer signaling (such as downlink control information (DCI) or uplink control information (UCI)).

In the present disclosure, the base station can be a 5G NR base station, such as gNB and ng-eNB. The gNB can provide NR user plane and control plane protocols for terminating with the terminal device. The ng-eNB is a node defined for compatibility with the 4G LTE communication system, which can be an upgrade of an evolved NodeB (eNB) of an LTE radio access network, providing an evolved universal terrestrial radio access (E-UTRA) user plane and control plane protocols for terminating with UEs. In addition, examples of the base station can include but are not limited to the following: at least one of a base transceiver station (BTS) and a base station controller (BSC) in a GSM system; at least one of a radio network controller (RNC) and a Node B in a WCDMA system; access points (APs) in WLAN and WiMAX systems; and corresponding network nodes in communication systems to be developed or under development. Part of functions of a base station herein can also be implemented as an entity that has control functions to communication in D2D, M2M, and V2X communication scenarios, or as an entity that plays a role of spectrum coordination in the cognitive radio communication scenario.

In the present disclosure, the terminal device can have the full breadth of its ordinary meanings, for example, the terminal device can be a mobile station (MS), user equipment (UE), an access node, and so on. The terminal device can be implemented as a device such as a mobile phone, a handheld device, a media player, a computer, a laptop computer, a tablet computer, an in-vehicle unit, a vehicle, or a wireless device of almost any type. In some cases, the terminal device can communicate using multiple wireless communication technologies. For example, the terminal device can be configured to communicate using one or more of GSM, UMTS, CDMA2000, WiMAX, LTE, LTE-A, WLAN, NR, Bluetooth, and so on. It should be understood that the embodiments described in the present disclosure are applicable to any type of terminal device.

### Example LBT procedures

In embodiments of the present disclosure, there can be contention between communication devices (including base stations and terminals) in terms of frequency usage. In some cases, the base stations and the terminals can use a plurality of beams and corresponding operating channels based only on their own communication needs. In some cases, in order to enable most communication devices to use operating channels in a fair manner, the base stations and the terminals can perform beam/channel sensing before accessing an operating channel (for example, through the LBT mechanism), and access the operating channel if it is determined that the channel may be clear. Due to a correspondence between beams and channels, beams and corresponding channels can be used interchangeably in the following description. For example, beam sensing means performing sensing on a corresponding channel; or vice versa.

In the LBT mechanism, a device first sending a message to another party can be referred to as an initiating device, and the corresponding another party can be referred to as a responding device. For example, if the base station first sends a downlink message, the base station is the initiating device and a corresponding terminal is the responding device; and the opposite situation can be understood similarly. For a case where the base station/terminal serves as the initiating device or the responding device, the LBT procedures described in the present disclosure are all applicable.

In embodiments of the present disclosure, in order to access a plurality of beams for SDM transmission, the initiating device can initiate a plurality of LBT procedures on the plurality of beams. Each LBT procedure can include a series of clear channel assessment (CCA) detections on a corresponding beam to determine whether the channel is likely to be clear or occupied. The CCA detection can be performed based on a signal energy or power condition monitored on an operating channel. For example, when monitored signal energy or power is lower than a specific threshold, the operating channel can be considered to be unoccupied (or clear, where CCA detection is successful this time). It should be understood that based on a channel occupancy status, the series of CCA detections can include successful and unsuccessful CCA detections. In the present disclosure, the LBT procedure needs to include at least a threshold number of successful CCA detections and even includes additional successful CCA detections before the channel or beam can be used for transmission.

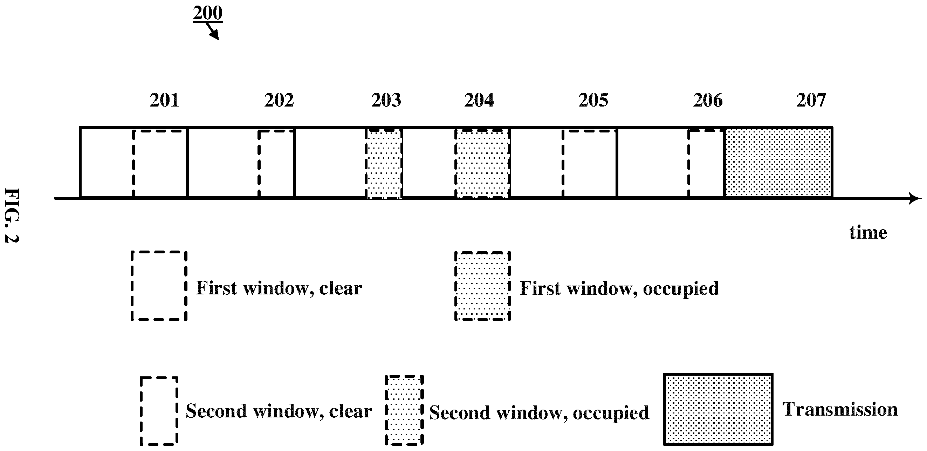

FIG. 2 is an example timing diagram 200 of an LBT procedure for a single beam according to an embodiment of the present disclosure. In FIG. 2, a series of slots are denoted by 201 to 207, including channel occupied slots, empty slots, and slots used for transmission. In FIG. 2, a first window and a second window are used to represent channel sensing time periods of different lengths, and different legends are used to represent whether a channel sensing result of each window is clear or occupied. The same legends are used in similar drawings below. The timing diagram 200 is caused when the initiating device expects to perform downlink or uplink transmission.

As shown in FIG. 2, in slot 201, the channel is sensed clear within a first window at the end of a channel occupied slot. As an example, the first window can have a slot length of 8 microseconds. At this time, a series of CCA detections of the LBT procedure are initiated for transmission backoff. Transmission backoff needs to last for at least D empty slots (which are also referred to as contention windows), which means that the LBT procedure includes at least D CCA detections. In some embodiments, D is a random value between 0 and a specific maximum number, and the maximum number is not less than 3. In this example, D takes a value of 2. In some embodiments, D can be assigned to a counter for counting successful CCA detections (hereinafter referred to as CCA counter). One successful CCA detection can decrease a value of the CCA counter by 1. A CCA counter value being 0 indicates that the LBT procedure for the beam and the corresponding transmission backoff have been completed.

For ease of understanding, table 1 below shows values of the CCA counter C1 for a single beam in FIG. 2.

| Slot | 201 | 202 | 203 | 204 | 205 | 206 |
|---|---|---|---|---|---|---|
| C1 | 2 | 1 | 1 | 1 | 1 | 0 |

In slot 202, the channel is sensed clear within a second window at the end of an empty slot, that is, the CCA detection is successful this time. Accordingly, the value of the CCA counter is decreased by 1 (that is, being equal to 1). In this example, the second window can have a slot length of 5 microseconds. In slot 203, the channel is sensed occupied within a second window at the end of an empty slot. Accordingly, this CCA detection is unsuccessful.

In slot 204, the channel is sensed occupied within a first window at the end of a channel occupied slot. In slot 205, the channel is sensed clear within a first window at the end of a next channel occupied slot. At this time, CCA detection is continued, so as to perform transmission backoff.

In slot 206, the channel is sensed clear within a second window at the end of an empty slot, that is, the CCA detection is successful this time. Accordingly, the value of the CCA counter is decreased by 1 (that is, being equal to 0). At this point, the LBT procedure and corresponding transmission backoff have been completed, and the beam can be then used for transmission, as shown by 207. This transmission can have a maximum channel occupancy time (MCOT) limit, such as 5 milliseconds.

It should be understood that slot window sizes depicted in FIG. 2 are only examples, and quantity values described are also examples. One or more of these parameters can be modified as desired.

Only a single LBT procedure corresponding to a single beam or channel is shown in FIG. 2. It should be understood that in a multi-beam scenario, parallel LBT sensing can be performed on a plurality of beams and a plurality of beams can be used for transmission. For example, SDM transmission gains can be obtained through MU-MIMO when there are at least two beams available for transmission.

In the spatial domain of millimeter-wave frequency bands, there can be significant variations in channel availability, resulting in a relatively large difference between parallel LBT procedures of a plurality of directional beams. Even when these beams use same time-frequency resources, this phenomenon remains evident. Therefore, when the LBT procedure shown in FIG. 2 is initiated on a plurality of beams, there can be relatively large differences between completion time of the LBT procedures for the beams. In order to obtain SDM gains from simultaneous transmissions on a plurality of beams, a beam for which the LBT procedure has been completed earlier needs to wait for other beams to complete their respective LBT procedures. In this way, a beam for which the LBT procedure has been completed too earlier experiences changes in their channel conditions while waiting, so that subsequent transmissions cannot be reliably performed to obtain SDM gains. In embodiments of the present disclosure, the parallel LBT procedures of the plurality of beams are coordinated to align the completion time of the parallel LBT procedures as much as possible. This enables SDM transmissions on the plurality of beams to be initiated almost simultaneously to obtain SDM gains, as described in detail below.

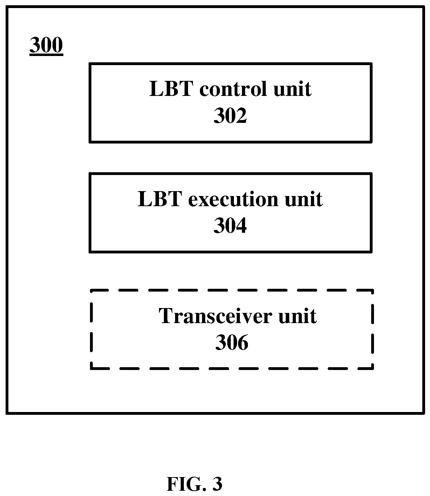

FIG. 3 illustrates an example electronic device for wireless communication according to an embodiment of the present disclosure. The electronic device 300 shown in FIG. 3 can include various units to implement the embodiments according to the present disclosure. In this example, the electronic device 300 can include an LBT control unit 302, an LBT execution unit 304, and an optional transceiver unit 306.

According to some embodiments, the electronic device 300 can be implemented as the base station 120A (or a part thereof) in FIG. 1, or can be implemented as a device (such as a controller or a part of the controller) for controlling the base station 120A or a device related to the base station 120A. Operations described below in conjunction with the base station can be implemented by the units 302 to 306 of the electronic device 300 or other possible units.

According to some embodiments, the electronic device 300 can be implemented as any one (or a part) of the terminal devices 110A to 110N in FIG. 1. Operations described below in conjunction with the terminal can be implemented by the units 302 to 306 of the electronic device 300 or other possible units.

In some embodiments, the LBT control unit 302 can initiate a plurality of LBT procedures on a plurality of beams. The LBT control unit 302 can further determine whether a threshold number of successful CCA detections have been completed on a specific beam (for example, a first beam) in the plurality of beams. For the LBT procedure on the at least one other beam of the plurality of beams, the LBT control unit 302 can determine that a corresponding threshold number of successful CCA detections have not been completed. Accordingly, the control unit 302 can further determine whether at least one additional CCA detection is to be performed on the first beam. In some embodiments, the LBT execution unit 304 can perform parallel LBT procedures on a plurality of beams under the control of the control unit 302 and perform at least one additional CCA detection on a specific beam. In some embodiments, optionally, the transceiver unit 306 can perform SDM transmission through a plurality of beams.

In embodiments of the present disclosure, the electronic device 300 can be implemented at the chip level, or can be implemented at the device level by including other external components (such as radio links and antennas). The electronic device 300 can be a whole machine functioning as a communication device, such as a network device, an in-vehicle unit, or a vehicle configured with communication capabilities.

The above various units are only logical modules divided based on logical functions to be implemented by the units, and are not intended to limit specific implementations, for example, the units can be implemented by software, hardware, or a combination of software and hardware. In actual implementation, the above various units can be implemented as independent physical entities, or can be implemented by a single entity (for example, a processor (CPU, DSP, or the like), or an integrated circuit). The processing circuitry can refer to various implementations of a digital circuitry, an analog circuitry, or a mixed signal (combination of analog and digital) circuitry that perform functions in a computing system. The processing circuitry can include, for example, a circuit such as an integrated circuit (IC), an application specific integrated circuit (ASIC), a portion or circuit of a separate processor core, the entire processor core, a separate processor, a programmable hardware device such as a field programmable gate array (FPGA), and/or a system including multiple processors.

The configurations or functions of the base station, the terminal, or the electronic device 300 can be understood with reference to the example processing or operations described below. The processing or operations can be performed by at least one of the base station, the terminal, or the electronic device 300.

### Coordination of multi-beam parallel LBT

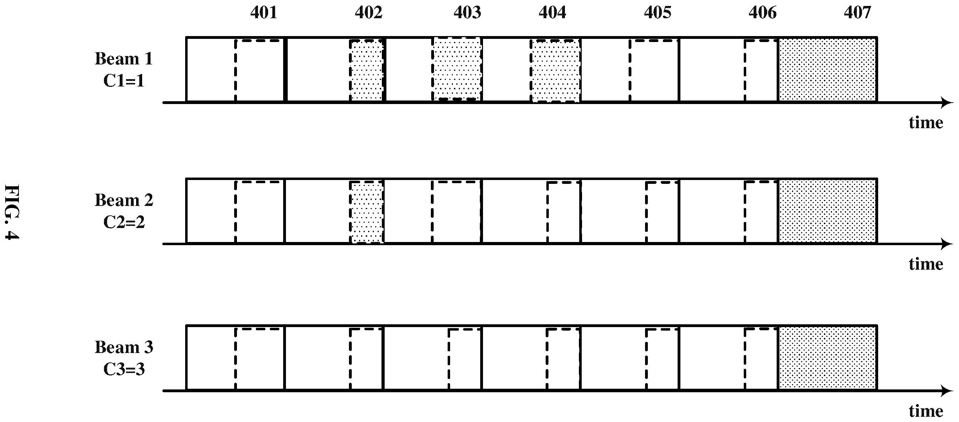

FIG. 4 is an example timing diagram of multi-beam LBT procedures according to an embodiment of the present disclosure. As an example, three LBT procedures are initiated on beam 1, beam 2, and beam 3. Initiating the plurality of LBT procedures includes generating a corresponding random number for each of the plurality of beams, where the random number defines a threshold number of successful CCA detections to be included in an LBT procedure for a corresponding beam.

For ease of understanding, table 2 below shows changes in values of the CCA counters in this example.

| | 401 | 402 | 403 | 404 | 405 | 406 |
|---|---|---|---|---|---|---|
| C1 | 1 | 1 | 1 | 1 | 1 | 0 |
| C2 | 2 | 2 | 2 | 1 | 0->1 | 0 |
| C3 | 3 | 2 | 1 | 0-> 1 | 0->1 | 0 |

As shown in FIG. 4, in slot 401, for each beam, the channel is sensed clear within a first window at the end of a channel occupied slot. Next, the CCA detection is performed on each beam for transmission backoff. For each beam, a contention window is determined by generating a random number. As an example, for beam 1, the LBT procedure includes at least D 1 = 1 CCA detection; for beam 2, the LBT procedure includes at least D2=2 CCA detections; for beam 3, the LBT procedure includes at least D3=3 CCA detections. The Di value of each beam is assigned to the CCA counter Ci of each beam (where i=1, 2, 3).

Reference can be made to the description of FIG. 2 to understand the LBT procedure on beam 1, which is briefly described as follows. For beam 1, in slot 402, the channel is sensed occupied within a second window at the end of an empty slot. The CCA detection is unsuccessful this time and the transmission backoff process is not completed. In both slots 403 and 404, the channel is sensed occupied within a first window at the end of a channel occupied slot. Accordingly, no transmission backoff is performed. In slot 405, the channel is sensed clear within a first window at the end of a channel occupied slot. Then, transmission backoff can be continued. In slot 406, the channel is sensed clear within a second window at the end of an empty slot, that is, the CCA detection is successful this time. Accordingly, the value of the CCA counter is decreased by 1 (that is, being equal to 0). At this point, the LBT procedure of beam 1 and the corresponding transmission backoff have been completed, indicating that the channel can be used for transmission.

The LBT procedures on beam 2 and beam 3 can be similarly understood with reference to the description of FIG. 2, except for some changes. For beam 2, the unsuccessful CCA detection in slot 402 causes the backoff process to end. In slot 403, the channel is sensed clear within a first window at the end of a channel occupied slot. Then, transmission backoff can be continued. Successful CCA detections in slots 404 and 405 cause the CCA counter to be reset to zero, which could have originally ended the current LBT procedure. However, because the LBT procedure (i.e., the CCA detection) on at least one beam (for example, beam 1) has not been completed, at least one additional CCA detection can be performed on beam 2 in order to align the time of the LBT procedure on beam 2 and that on the at least one beam as much as possible. Different from FIG. 2, in this example, a value of C2 is adjusted by increasing by 1 (as indicated by "0->1" corresponding to beam 2 in slot 405 in table 2). Accordingly, one additional CCA detection is performed on beam 2. Increasing by 1 in this adjustment is only an example. Based on needs, C2 can be increased by another value N, for example, the minimum value, average value, or maximum value of other beam counter values. In slot 406, the CCA detection is successful and the value of C2 is reset to zero.

For beam 3, successful CCA detections in slots 402 to 404 cause the CCA counter C3 to be reset to zero, which could have originally ended the current LBT procedure. However, because the LBT procedure (i.e., CCA detection) on at least one beam (for example, beam 1 and beam 2) has not been completed, at least one additional CCA detection can be performed on beam 3 in order to align the time of the LBT procedure on beam 3 and that on the at least one beam as much as possible. In this example, a value of C3 is adjusted by increasing by 1 (as indicated by "0->1" corresponding to beam 3 in slot 404 in table 2). Accordingly, one additional CCA detection is performed on beam 3. A successful CCA detection in slot 405 causes the CCA counter C3 to be reset to zero again. Because the LBT procedure (i.e., CCA detection) on at least one beam (for example, beam 1 and beam 2) has not been completed, at least one additional CCA detection can be performed on beam 3 in order to align the time of the LBT procedure on beam 3 and that on the at least one beam as much as possible. In this example, the value of C3 is also adjusted by increasing by 1 (as indicated by "0->1" corresponding to beam 3 in slot 405 in table 2). Accordingly, one additional CCA detection is performed on beam 3. In slot 406, the CCA detection is successful and the value of C3 is reset to zero.

In slot 406, the LBT procedures on all the three beams have been completed, and therefore the three beams can be used along for SDM transmission. For example, SDM transmission gains can be obtained through MU-MIMO.

In the example of FIG. 4, after the LBT procedures on all the three beams have been completed, the three beams can be used for SDM transmission to obtain SDM gains. In addition, after original LBT procedures on beam 2 and beam 3 have been completed, increasing the values of the corresponding CCA counters (for example, increasing by 1) enables at least one additional CCA detection to be performed on beam 2 and beam 3, so as to obtain accurate conditions of the corresponding channels before SDM transmission. This can decrease the possibility of using occupied channels for SDM transmission and help ensure reliable SDM transmission.

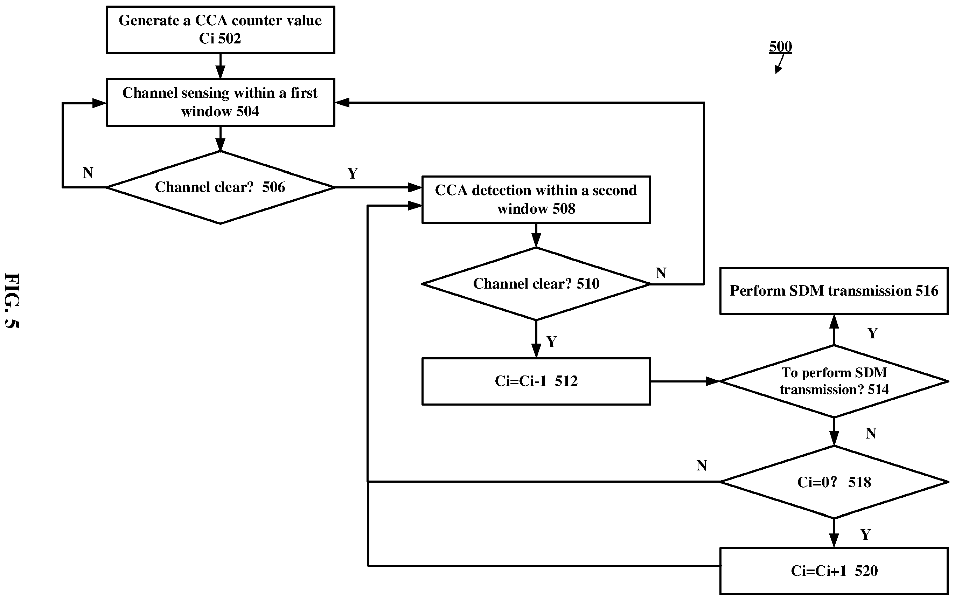

FIG. 5 illustrates example processing 500 for coordinating multi-beam parallel LBT according to an embodiment of the present disclosure. The example processing 500 can be performed by the base station 120A or terminal device 110 that is to perform downlink or uplink transmission. Next, the example processing is described using downlink transmission as an example; and such processing is also applicable to uplink transmission.

Before the base station 120A performs downlink SDM transmission, multi-beam parallel LBT sensing needs to be performed on downlink channels. The processing 500 can correspond to an LBT procedure on any one beam i or channel i. For multiple beams, there can be respective processing 500 corresponding to respective LBT procedures.

As shown in FIG. 5, in response to determining that LBT sensing is to be performed on beam i, in step 502, the base station 120A can generate a CCA counter value Ci. In step 504, the base station 120A can perform channel sensing within a first window at the end of a channel occupied slot. For example, the first window can have a slot length of 8 microseconds.

In step 506, the base station 120A can determine, based on a channel sensing result in step 504, whether the channel i is clear. If the channel i is occupied, return to step 504 for next channel sensing. If the channel i is clear, proceed to step 508 to perform channel backoff (i.e., CCA detection) in subsequent empty slots. In step 508, the base station 120A can perform channel sensing within a second window at the end of a next empty slot. For example, the second window can have a slot length of 5 microseconds.

In step 510, the base station 120A can determine, based on a channel sensing result in step 508, whether the channel i is clear. If the channel i is occupied, that is, the CCA detection in the second window is unsuccessful, return to step 504 to perform channel sensing in the first window. If the channel i is clear, proceed to step 512 to decrease the CCA counter value by 1. Next, proceeding from step 512 to step 514, it is determined based on the parallel LBT procedures whether a plurality of beams meet SDM transmission conditions. Meeting SDM transmission conditions means that LBT procedures for the plurality of beams to be used have all been completed and the channels are clear. An example of determining whether SDM transmission conditions are met is to be described in detail below. If the SDM transmission conditions are met, proceeding from step 514 to step 516 to use the plurality of beams for SDM transmission; otherwise, proceed from step 514 to step 518 to determine whether the CCA counter value Ci of the beam i is 0.

In step 518, Ci being not equal to 0 can indicate that Ci successful CCA detections still need to be performed to determine that the beam i is clear and available. Accordingly, proceeding from step 518 to step 508, channel sensing is performed within a second window at the end of a next empty slot. This process is the same as the processing described above with reference to step 508 to step 518, and will not be described again.

In step 518, Ci being equal to 0 can indicate that successful CCA detection has been completed on the beam i. Accordingly, proceeding from step 518 to step 520 to set Ci to a non-zero value (for example, increasing Ci by 1). Then, proceeding from step 520 to step 508, channel sensing is performed within a second window at the end of a next empty slot. This process is the same as the processing described above with reference to step 508 to step 518, and will not be described again.

For the beam i, Ci being reset to zero in step 518 can indicate that the beam i is clear and can be used for transmission. However, in the processing 500, if it is determined in step 514 that the plurality of beams have not yet met SDM transmission conditions, Ci being reset to zero is then set to a non-zero value, so as to further perform channel condition sensing on the beam i before the SDM transmission conditions are met. Through the operations in step 514 to step 520, an additional CCA detection can is performed on the beam i, so as to obtain an accurate condition of the corresponding channel before SDM transmission.

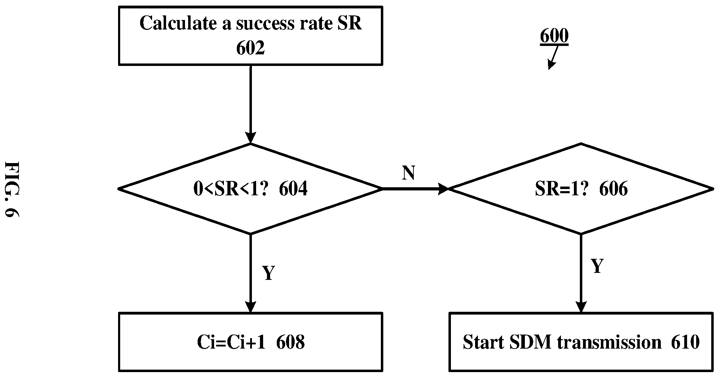

FIG. 6 illustrates example processing 600 for determining whether multi-beam SDM transmission conditions are met according to an embodiment of the present disclosure. As described above, meeting SDM transmission conditions means that the LBT procedures for the plurality of beams to be used have all been completed and the channels are clear. In some embodiments, a success rate SR of the LBT procedures can be defined for a plurality of beams. For example, the SR can be defined as a ratio of the number of beams with a CCA counter value of 0 to the total number of the plurality of beams.

As shown in FIG. 6, in step 602, the success rate SR is calculated. For example, the success rate SR can be calculated when a CCA counter with a value of 0 (corresponding to a beam for which the LBT procedure has been completed) is present. In step 604, it is determined whether 0<SR<1 holds true. If true, it indicates presence of a beam for which the LBT procedure has not been completed. Accordingly, proceeding from step 604 to step 608, the CCA counters of beams for which the LBT procedures have been completed are each set to a non-zero value (for example, being increased by 1), so that CCA detection can be further performed on these beams. If it is determined in step 604 that 0<SR<1 does not hold true, proceeding to step 606 to further determine whether SR=1 holds true. If true, it indicates that the LBT procedures for the plurality of beams have been completed and the channels are all clear and available. Accordingly, proceeding from step 606 to step 610 to start SDM transmission.

It should be understood that the success rate-based processing in FIG. 6 is only an example. In some other embodiments, whether the SDM transmission conditions are met can be determined in different manners based on needs. For example, a sum of the CCA counter values of the plurality of beams can be obtained. If a summation result is greater than 0, it indicates presence of beams for which the LBT procedures have not been completed and that the SDM transmission conditions are not met; or if the summation result is equal to 0, it indicates that the SDM transmission conditions have been met. For another example, the CCA counter values of the plurality of beams can be traversed to determine whether there is a CCA counter with a non-zero value. If there is a CCA counter with a non-zero value, it indicates presence of beams for which the LBT procedures have not been completed and that the SDM transmission conditions are not met; or if there is no CCA counter with a non-zero value, it indicates that the SDM transmission conditions have been met. Those skilled in the art can conceive of other ways to determine whether the SDM transmission conditions are met, and these ways all fall within the scope of the present disclosure.

### Multi-beam selection based on parallel LBT

In the present disclosure, on the one hand, advantageously, SDM transmission using as many beams as possible can help obtain higher SDM gains. On the other hand, waiting for completion of the LBT procedures on the plurality of beams can take a long time, which is disadvantageous. This disadvantage will be more pronounced if a channel condition of a specific beam is relatively poor (for example, frequent contention over the channel). Accordingly, in embodiments of the present disclosure, based on parallel LBT procedures, only part of beams can be selected from the plurality of beams for SDM transmission, as described in detail below.

In some embodiments, the number of adjustments for increasing a counter value of any one of the plurality of beams can be recorded. In a case where the number reaches a second threshold, the parallel LBT procedures for the plurality of beams can be ended, and multi-beam transmission can be performed without using a beam for which the LBT procedure has not been completed.

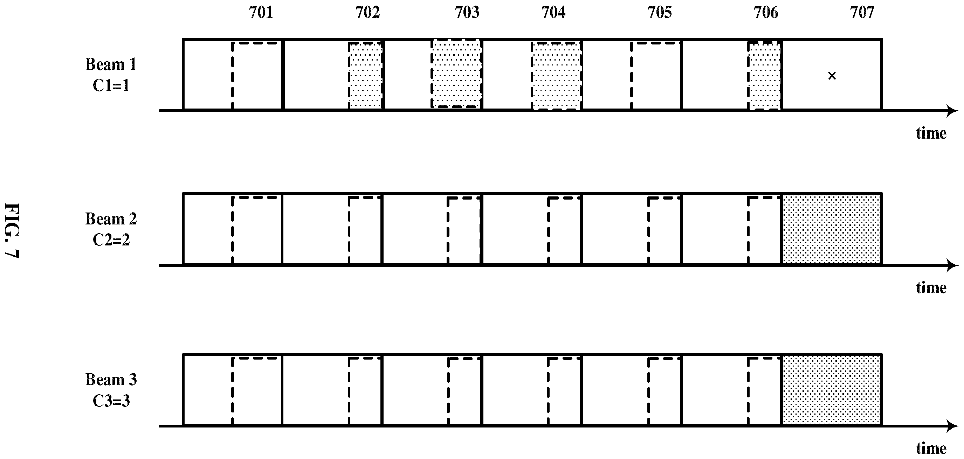

FIG. 7 is an example timing diagram of the multi-beam parallel LBT operation according to an embodiment of the present disclosure. In FIG. 7, a beam for SDM transmission can be selected from a plurality of beams based on the multi-beam parallel LBT.

For ease of understanding, table 3 below shows changes in the value of the CCA counter in FIG. 7. Similar to the example in FIG. 4, "0->1" represents one adjustment (for example, increasing by 1) made to a CCA counter of a corresponding beam.

| | 701 | 702 | 703 | 704 | 705 | 706 |
|---|---|---|---|---|---|---|
| C1 | 1 | 1 | 1 | 1 | 1 | 1 |
| C2 | 2 | 1 | 0->1 | 0->1 | 0->1 | 0 |
| C3 | 3 | 2 | 1 | 0->1 | 0->1 | 0 |

As shown in FIG. 7, a channel condition of beam 1 is not good (for example, due to frequent contention over the channel), and C1=1 successful CCA detection has not been completed even in slot 706. In this example, a threshold number of times for adjusting the CCA counters of the plurality of beams is set, for example, being 5. As shown in table 3, because channel conditions of beam 2 and beam 3 are good, an LBT procedure for beam 2 is completed in slots 703 to 705 and a CCA counter value C2 is adjusted three times; and an LBT procedure for beam 3 is completed in slots 704 and 705 and a CCA counter value C3 is adjusted twice. Therefore, in slot 705, the CCA counter values of beam 2 and beam 3 have been adjusted a total of five times, reaching the set threshold number of times. Accordingly, it is determined not to use beam 1 for which the LBT procedure has not been completed, in subsequent SDM transmissions. In slot 706, the CCA detections on both beam 2 and beam 3 are successful. Accordingly, the values of C2 and C3 are reset to zero. In this case, only beam 2 and beam 3 can be used for SDM transmission (that is, beam 1 is not used).

In the example of FIG. 7, SDM gains obtained by two beams are less than those of three beams. However, there is no need to wait for completion of the LBT procedure on beam 1, so that SDM transmission can be performed as early as possible (that is, a waiting time related to the parallel LBT procedures is decreased). According to the actual scenario, the threshold number of times of adjusting the CCA counters of the plurality of beams can be properly set to achieve balance or selection between SDM gains and waiting time. For example, in regions where terminals or access nodes are densely distributed, the threshold number can be larger to improve transmission gains and decrease interference; in regions where terminals or access nodes are sparsely distributed, the threshold number can be smaller. For urgent transmission tasks, the threshold number of times can be set smaller to decrease delay of the LBT procedure; for latency-tolerant services or tasks with higher reliability requirements, the threshold number of times can be larger.

### Parallel LBT procedure based on beam grouping

During coordination processing of parallel LBT, beams can be grouped based on the channel conditions of the plurality of beams. For example, beams can be grouped based on sensing results (which reflect channel conditions) within periodic sensing windows. A common CCA counter for each group can be set, and LBT procedures for beam members of a corresponding group are controlled by using the common CCA counter.

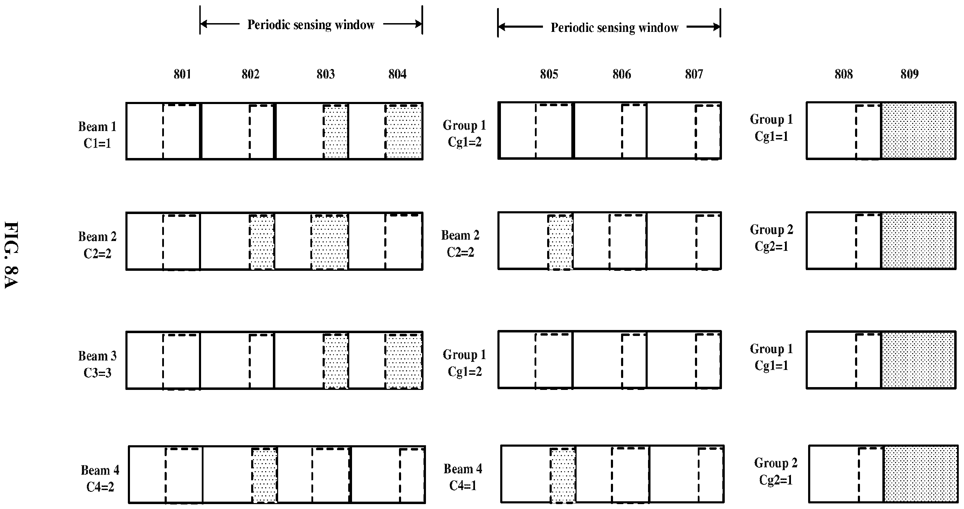

FIG. 8A is an example timing diagram of the multi-beam parallel LBT operation according to an embodiment of the present disclosure. In FIG. 8A, four LBT procedures are initiated on beam 1, beam 2, beam 3, and beam 4. Initiating the plurality of LBT procedures includes generating a corresponding random number for each of the plurality of beams, where the random number defines a threshold number of successful CCA detections to be included in an LBT procedure for a corresponding beam.

For ease of understanding, table 4 below shows changes in the value of the CCA counter.

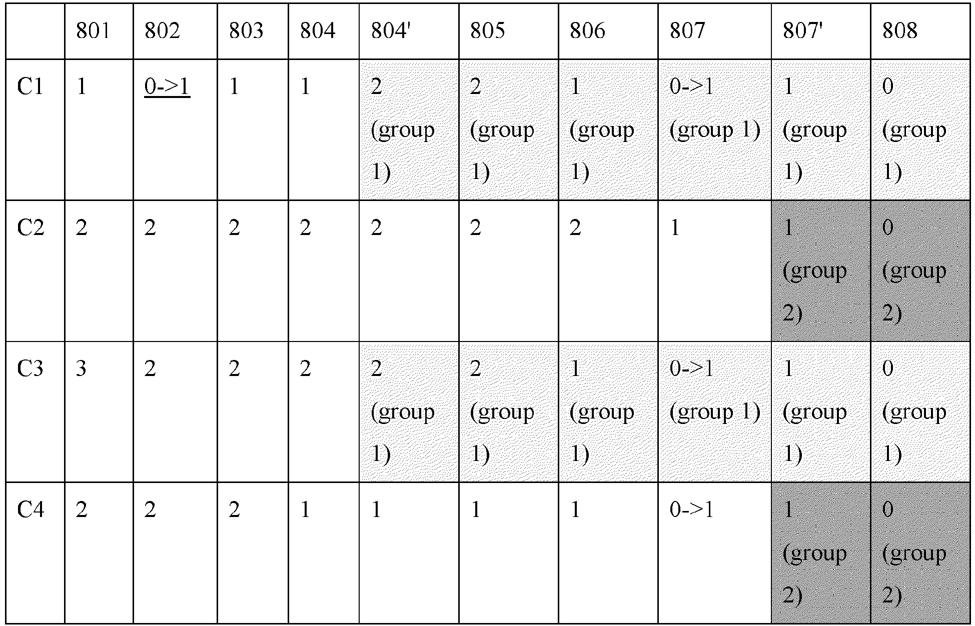

As shown in FIG. 8A, in slot 801, for each beam, the channel is sensed clear within a first window at the end of a channel occupied slot. Next, CCA detection is performed on each beam for transmission backoff. For each beam, a contention window is determined by generating a random number. Specifically, for beam 1, the LBT procedure includes at least D 1 = 1 CCA detection; for beam 2, the LBT procedure includes at least D2=2 CCA detections; for beam 3, the LBT procedure includes at least D3=3 CCA detections; for beam 4, the LBT procedure includes at least D4=2 CCA detections. As shown in FIG. 8A, the Di value is assigned to the CCA counter Ci of each beam (where i=1, 2, 3, 4).

LBT procedures on a plurality of beams in slots 801 to 804 can be understood with reference to the descriptions of FIG. 4. For example, for beam 1, in slot 802, the channel is sensed clear within a second window at the end of an empty slot, that is, the CCA detection is successful this time. Accordingly, the value of C1 is decreased by 1 (that is, being equal to 0). At this time, the corresponding threshold number of successful CCA detections have not been completed for the LBT procedure on the at least one other beam, and therefore the value of C1 is increased by 1 (that is, being equal to 1).

In some embodiments, a first subset of the plurality of beams can be grouped into a first group based on sensing within periodic windows. A CCA counter value of a specific beam in the first subset is set as a common CCA counter of the first group, where the common CCA counter takes priority over individual CCA counters of members of the first subset, and concurrent successful CCA detections for the members of the first subset can decrease the value of the common CCA counter by 1. In some embodiments, the specific beam is a member in the first subset with the largest CCA counter value.

As shown in FIG. 8A, slots 802 to 804 and slots 805 to 807 define periodic sensing windows. Within each periodic sensing window, channel conditions of the plurality of beams can be tracked. In some embodiments, the channel conditions can include a statistical result of channel occupancy of the plurality of beams, for example, the number of channels occupied for the plurality of beams within the sensing window or distribution positions of channels occupied within the sensing window. Using slots 802 to 804 as an example, for both beams 1 and 3, one successful CCA detection is tracked. Therefore, in slot 804, beam 1 and beam 3 can be put into group 1, and both beams are controlled as a whole so as to perform the LBT procedure. For both beams 1 and 3, successful CCA detection is tracked in slot 802, that is, the two have the same or similar distribution of channel occupancy. In some embodiments, this can be an alternative or additional consideration factor for forming group 1.

In table 4, the Ci state of each beam after group 1 is obtained through grouping in slot 804 is denoted by 804'. In this example, C3 (C3=2) of beam 3 with a larger Ci value in group 1 is assigned to the common CCA counter of group 1, Cg1=2. In the subsequent LBT procedure, the value of Cg1 takes priority over the values of C1 and C3 of beam 1 and beam 3. It can be considered that respective CCA detections can be further performed on beam 1 and beam 3, but the CCA detections for both can be associated with the common CCA counter Cg1. For beam 1, Cg 1 =2 takes priority over C1=1. In subsequent CCA detections, only when successful CCA detections occur on both beam 1 and beam 3 (which are considered as a successful CCA detection for group 1), the value of the common CCA counter is decreased by 1, as shown in slots 806 and 807.

Similarly, within the sensing window of slots 805 to 807, for both beams 2 and 4, one successful CCA detection is tracked in slot 807. Therefore, in slot 807, beam 2 and beam 4 can be put into group 2, and both beams are controlled as a whole so as to perform the LBT procedure. In table 4, the Ci state of each beam after group 2 is obtained through grouping in slot 807 is denoted by 807'. In this example, C2=C4=1, so a common CCA counter Cg2 of group 2 is set to 1. In the subsequent LBT procedure, the value of Cg2 takes priority over the CCA counter values of beam 2 and beam 4. It can be considered that respective CCA detections can be further performed on beam 2 and beam 4, but the CCA detections for both can be associated with the common CCA counter Cg2. In subsequent CCA detections, only when successful CCA detections occur on both beam 2 and beam 4 (which are considered as a successful CCA detection for group 2), the value of the common CCA counter is decreased by 1, as shown in slot 807.

It should be understood that in some cases, the beam members of group 1 can be updated (for example, including addition and replacement of members) based on sensing within the second window. The common CCA counter of group 1 can be updated based on the maximum CCA counter value for the beam members.

In the example of FIG. 8A, at least two beams with similar channel conditions are put into one group. It should be understood that such grouping manner is only an example. Additionally or alternatively, a plurality of beams can be grouped based on CCA counter values. For example, at least two beams with similar CCA counter values can be put into one group, or at least two beams with diverse CCA counter values (for example, with a relatively large difference) can be put into one group. It should be understood that during beam grouping, replacing the individual CCA counters of the beams with the common CCA counter can decrease complexity related to maintenance and adjustment of the CCA counters. This helps decrease the complexity of the parallel LBT procedures.

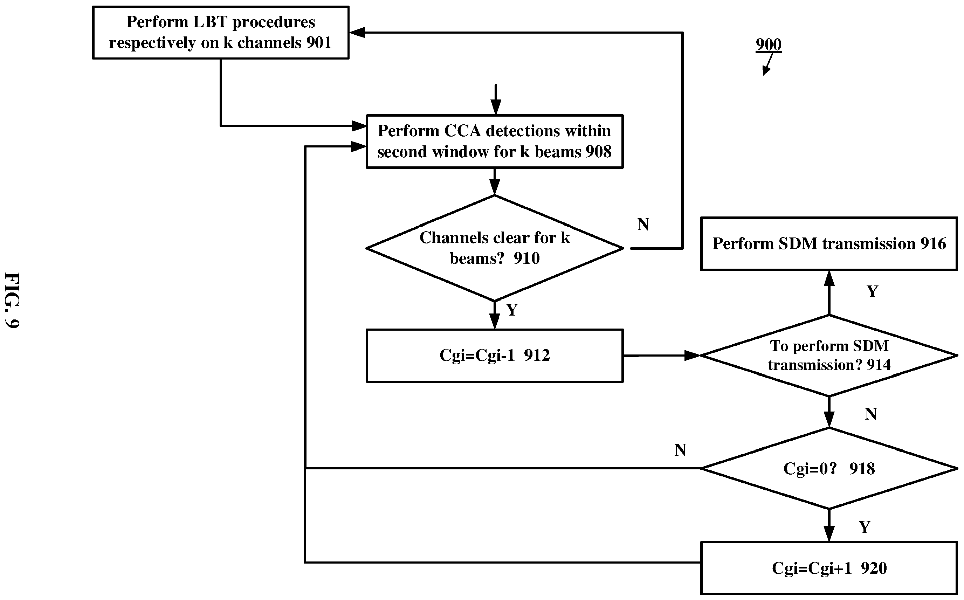

FIG. 9 illustrates example processing 900 for performing parallel LBT based on beam grouping according to an embodiment of the present disclosure. This example processing 900 can be performed by the base station 120A or the terminal device 110 that is intended to perform downlink or uplink transmission. Next, the example processing is described using downlink transmission as an example; and such processing is also applicable to uplink transmission.

Assuming that k beams have been grouped into an i-th group, a common CCA counter of this group is denoted as Cgi. It should be understood that, depending on specific LBT status on the k beams, the example processing 900 can begin with operation 908 in response to the grouping operation.

In step 908, the base station 120A can perform channel sensing on the k beams within a second window at the end of a next empty slot. For example, the second window can have a slot length of 5 microseconds.

In step 910, the base station 120A can determine, based on a channel sensing result in step 908, whether k channels are all clear. If at least one channel i is occupied, that is, the CCA detection within the second window is unsuccessful, the processing 900 proceeds to step 901 to perform the LBT procedure on k channels respectively. It should be understood that in step 901, the LBT procedure on each channel can be performed independently based on the logic of the processing 500 described above. In step 910, if k channels are all clear, proceeding to step 912, so that the value of the common CCA counter Cgi is decreased by 1. Next, proceeding from step 912 to step 914, it is determined, based on the parallel LBT procedures of all the plurality of beams including the k beams, whether the plurality of beams satisfy the SDM transmission conditions. If the SDM transmission conditions are met, proceeding from step 914 to step 916 to use the plurality of beams for SDM transmission; otherwise, proceeding from step 914 to step 918 to determine whether the common CCA counter value Cgi of the i-th group of beams is 0.

In step 918, Cgi being not equal to 0 can indicate that Cgi successful CCA detections still need to be performed on k beams so as to determine that the k beams are clear and available. Accordingly, proceeding from step 918 to step 908, channel sensing is performed within a second window at the end of a next empty slot. It should be understood that the following operation can be another cycle of the above operations and will not be described again.

In step 918, Cgi being equal to 0 can indicate that successful CCA detection has been completed on the k beams. Accordingly, proceeding from step 918 to step 920 to set Cgi to a non-zero value (for example, increasing Cgi by 1). Then, proceeding from step 920 to step 908 to perform another cycle of the above operations.

For the i-th group of beams, Cgi being reset to zero in step 918 can indicate that k beams are clear and can be used for transmission. However, in the processing 900, it is determined in step 914, based on the parallel LBT procedures, that a plurality of beams have not yet met SDM transmission conditions. Therefore, Ci being reset to zero is set to a non-zero value, so as to further perform channel condition sensing on the k beams before the SDM transmission conditions are met.

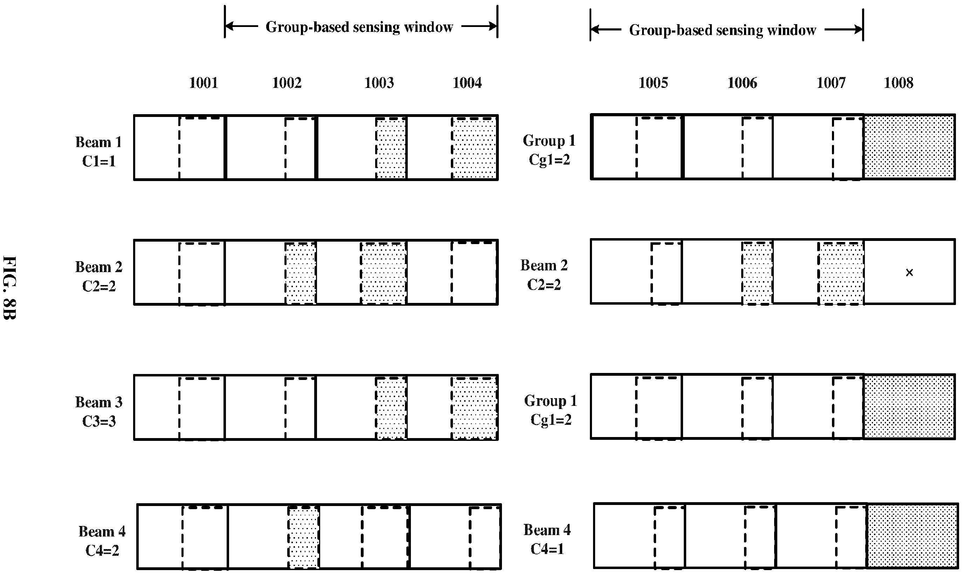

During parallel LBT processing based on beam grouping, beams with clear channels can also be selected from a plurality of beams through the parallel LBT procedures, so as to perform SDM transmission. FIG. 8B illustrates an example timing diagram of the multi-beam parallel LBT operation according to an embodiment of the present disclosure. In this example, the CCA counter value has been adjusted three times before 1007, as shown by "0->1" in slots 1002, 1005, and 1006 in table 5 below. The channel condition of beam 2 is not good (for example, due to frequent contention over the channel), and C2=2 successful CCA detections have not been completed even when in slot 1007. Because the number of adjustments reaches the threshold number, beam 2 for which the LBT procedure has not been completed can be not used in subsequent SDM transmissions. In slot 1007, the CCA detections of beam 1, beam 3, and beam 4 are all successful. Accordingly, the values of C1, C3, and C4 are reset to zero. At this time, only beam 1, beam 3, and beam 4 can be used for SDM transmission (that is, beam 2 is not used).

| | 1001 | 1002 | 1003 | 1004 | 1004' | 1005 | 1006 | 1007 |
|---|---|---|---|---|---|---|---|---|
| C1 | 1 | 0->1 | 1 | 1 | 2 (group 1) | 2 (group 1) | 1 (group 1) | 0 (group 1) |
| C2 | 2 | 2 | 2 | 2 | 2 | 1 | 1 | 1 |
| C3 | 3 | 2 | 2 | 2 | 2 (group 1) | 2 (group 1) | 1 (group 1) | 0 (group 1) |
| C4 | 2 | 2 | 2 | 1 | 1 | 0->1 | 0->1 | 0 |

### Example method

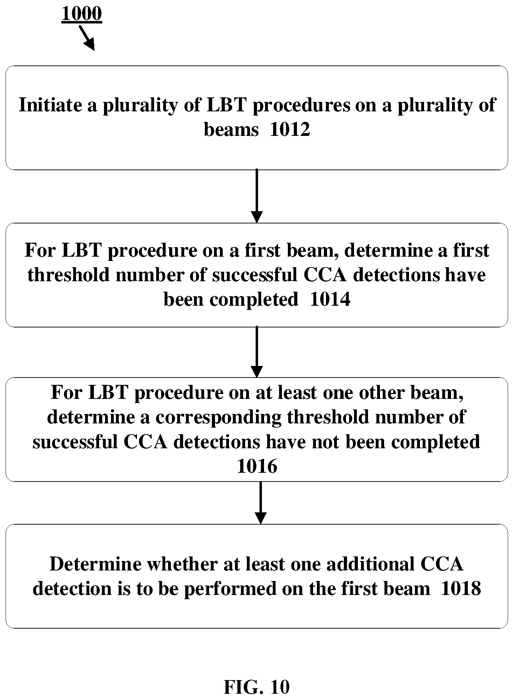

FIG. 10 illustrates an example method for wireless communication according to an embodiment of the present disclosure. The method can be performed by any one of the electronic device 300, a base station, or a terminal. As shown in FIG. 10, the method 1000 can include initiating a plurality of LBT procedures on a plurality of beams (block 1012). The method can further include, for an LBT procedure on a first beam of the plurality of beams, determining that a first threshold number of successful CCA detections have been completed (block 1014). The method can further include, for an LBT procedure on at least one other beam of the plurality of beams, determining that a corresponding threshold number of successful CCA detections have not been completed (block 1016). The method can further include determining whether at least one additional CCA detection is to be performed on the first beam (block 1018). Further details of the method can be understood with reference to the descriptions above. In some embodiments, in response to the determining that the corresponding threshold number of successful CCA detections have not been completed for the LBT procedure on the at least one other beam, it is determined that at least one additional CCA detection is to be performed on the first beam.

In one embodiment, the initiating the plurality of LBT procedures includes generating a corresponding random number for each of the plurality of beams, where the random number defines a threshold number of successful CCA detections to be included in an LBT procedure for a corresponding beam. The method 1000 can include setting a value of a CCA counter of the corresponding beam to be equal to the random number, where one successful CCA detection on the beam decreases the value of the CCA counter by 1.

In one embodiment, the determining that the first threshold number of successful CCA detections have been completed includes determining that a value of a CCA counter of the first beam is 0. For the LBT procedure on the at least one other beam, the determining that the corresponding threshold number of successful CCA detections have not been completed includes determining that a value of a CCA counter of the at least one other beam is not 0. The determining that at least one additional CCA detection is to be performed on the first beam includes increasing the value of the CCA counter of the first beam by N, where N≥1.

In one embodiment, for the LBT procedure on the at least one other beam, it is determined, based on one of the following, that the corresponding threshold number of successful CCA detections have not been completed: a ratio of the number of beams with a CCA counter value of 0 to the total number of the plurality of beams is less than 1; or a sum of CCA counter values of the plurality of beams is greater than 0.

In one embodiment, the method 1000 can include, based on sensing within a first window, grouping a first subset of the plurality of beams into a first group; and assigning a value of a CCA counter of a second beam in the first subset to a common CCA counter of the first group, where the common CCA counter takes priority over individual CCA counters of members of the first subset, and concurrent successful CCA detections for the members of the first subset decrease the value of the common CCA counter by 1.

In one embodiment, the first subset includes at least two beams with similar channel conditions; the first subset includes at least two beams with similar CCA counter values; or the first subset includes at least two beams with diverse CCA counter values.

In one embodiment, the second beam is a member in the first subset with the largest CCA counter value.

In one embodiment, the method 1000 can include, based on sensing within a second window, updating the first group to include a second subset of the plurality of beams; and assigning a value of a CCA counter of a third beam in the second subset to the common CCA counter of the first group.

In one embodiment, the method 1000 can include recording the number of times of increasing a value of a counter of any one beam of the plurality of beams; when the number of times reaches a second threshold, ending the plurality of LBT procedures; and performing multi-beam transmission without using a beam for which the LBT procedure has not been completed.

In one embodiment, the plurality of beams includes a plurality of downlink beams, and the electronic device can be implemented as at least part of a base station.

In one embodiment, the plurality of beams includes a plurality of uplink beams, and the electronic device can be implemented as at least part of a terminal device.

Various exemplary electronic devices and methods according to embodiments of the present disclosure have been described above. It should be understood that the operations or functions of these electronic devices can be combined with each other to achieve more or less operations or functions than described. The operational steps of the methods can also be combined with each other in any suitable order, so that similarly more or fewer operations are achieved than described.

It should be understood that the machine-executable instructions in the machine-readable storage medium or program product according to the embodiments of the present disclosure can be configured to perform operations corresponding to the device and method embodiments described above. When referring to the above device and method embodiments, the embodiments of the machine-readable storage medium or the program product are clear to those skilled in the art, and therefore description thereof will not be repeated herein. A machine-readable storage media and a program product for carrying or including the above-described machine-executable instructions also fall within the scope of the present disclosure. Such storage medium can include, but is not limited to, a floppy disk, an optical disk, a magneto-optical disk, a memory card, a memory stick, and the like.

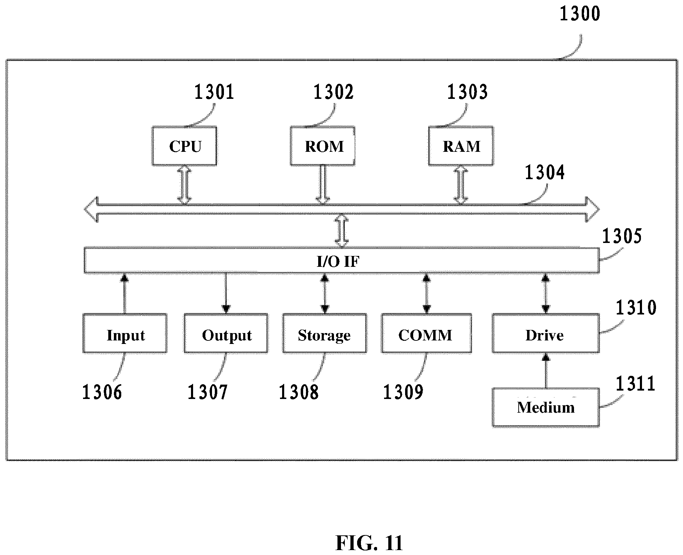

In addition, it should be understood that the above series of processing and devices can alternatively be implemented by software and/or firmware. In the case of implementation by software and/or firmware, a program constituting the software is installed from a storage medium or a network to a computer having a dedicated hardware configuration, such as a general-purpose personal computer 1300 shown in FIG. 11. When various programs are installed, the computer is capable of performing various functions and so on. FIG. 11 is a block diagram of an example structure of a personal computer as an information processing device that can be used in an embodiment of the present disclosure. In an example, the personal computer can correspond to the foregoing exemplary terminal device according to the present disclosure.

In FIG. 11, a central processing unit (CPU) 1301 executes various processing based on a program stored in a read-only memory (ROM) 1302 or a program loaded from a storage portion 1308 to a random access memory (RAM) 1303. The RAM 1303 also stores data required for executing various processing and the like by the CPU 1301 when necessary.

The CPU 1301, the ROM 1302, and the RAM 1303 are connected with each other via a bus 1304. An input/output port 1305 is also connected to the bus 1304.

The following components are connected to the input/output port 1305: an input part 1306, including a keyboard, a mouse, and the like; an output part 1307, including a display such as a cathode-ray tube (CRT) and a liquid crystal display (LCD), a speaker, and the like; a storage part 1308, including a hard disk and the like; and a communication part 1309, including a network interface card such as a LAN card or a modem. The communication part 1309 performs communication processing via a network such as the Internet.

Based on needs, a drive 1310 is also connected to the input/output port 1305. A removable medium 1311 such as a magnetic disk, an optical disk, a magneto-optical disk, a semiconductor memory, or the like is mounted on the drive 1310 when necessary, so that a computer program read therefrom is installed in the storage part 1308 when necessary.

In a case that the foregoing series of processing are implemented by software, programs constituting the software are installed from a network such as the Internet or a storage medium such as the removable medium 1311.

Those skilled in the art should understand that such a storage medium is not limited to the removable medium 1311 shown in FIG. 11, in which the program is stored and distributed independent from a device to provide the program for users. For example, the removable medium 1311 includes a magnetic disk (including a floppy disk (registered trademark)), an optical disc (including a compact disk read-only memory (CD-ROM) and a digital versatile disk (DVD)), a magneto-optical disc (including a mini disk (MD) (registered trademark)), and a semiconductor memory. Alternatively, the storage medium can be the ROM 1302, a hard disk included in the storage part 1308, or the like, in which the program is stored, and can be distributed to users along with a device including the storage medium.

The technology of the present disclosure can be applied to various products. For example, the base stations mentioned in the present disclosure can be implemented as any type of evolved Node B (gNB), such as a macro gNB and a small gNB. The small gNB can be a gNB covering a cell smaller than the macro cell, such as a pico gNB, a micro gNB, and a home (femto) gNB. Alternatively, the base station can be implemented as any other type of base station, such as a NodeB and a Base Transceiver Station (BTS). The base station can include: a body (also referred to as a base station device) configured to control radio communication; and one or more remote radio heads (RRHs) disposed at a different location from the body. In addition, various types of terminals which will be described below can each operate as a base station by performing base station functions temporarily or semi-persistently.

For example, the terminal device mentioned in the present disclosure, also referred to as user equipment in some examples, can be implemented as a mobile terminal (such as a smartphone, a tablet personal computer (PC), a notebook PC, a portable game terminal, a portable/dongle type mobile router and digital camera) or in-vehicle terminal (such as car navigation device). The user equipment can also be implemented as a terminal that performs machine-to-machine (M2M) communication (also referred to as a machine type communication (MTC) terminal). Further, the user equipment can be a radio communication module (such as an integrated circuit module including a single wafer) installed on each of the above terminals.

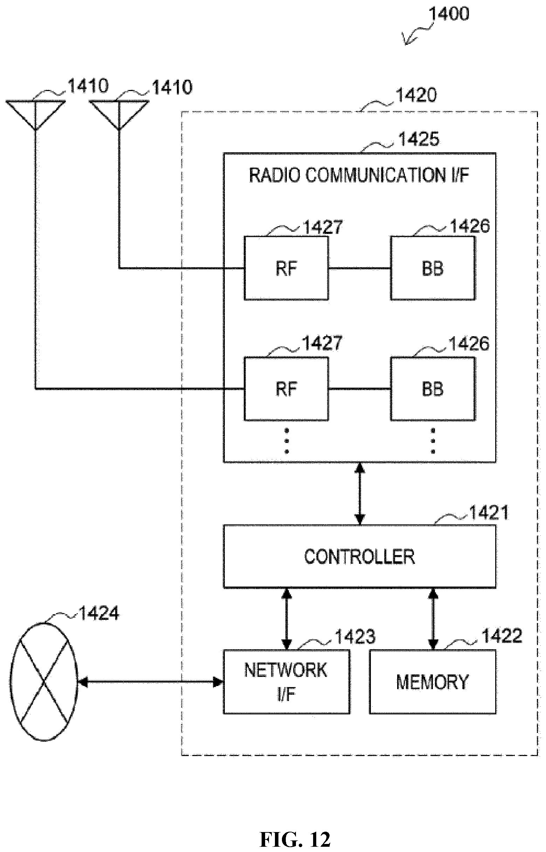

Use cases according to the present disclosure will be described below with reference to FIGs. 12 to 15.

### Use cases for the base station

### First use case

FIG. 12 is a block diagram illustrating a first example of a schematic configuration of a gNB to which the technology in content of the present disclosure is applicable. The gNB 1400 includes a plurality of antennas 1410 and a base station device 1420. The base station device 1420 and each antenna 1410 can be connected to each other via an RF cable. In one implementation, the gNB 1400 (or base station device 1420) herein can correspond to the electronic devices 300A, 1300A, and/or 1500B described above.

Each of the antennas 1410 includes a single or multiple antenna elements (such as multiple antenna elements included in a multiple input and multiple output (MIMO) antenna), and is used for the base station device 1420 to transmit and receive radio signals. As shown in FIG. 12, the gNB 1400 can include multiple antennas 1410. For example, multiple antennas 1410 can be compatible with multiple frequency bands used by the gNB 1400.

The base station device 1420 includes a controller 1421, a memory 1422, a network interface 1423, and a radio communication interface 1425.

The controller 1421 can be, for example, a CPU or a DSP, and operates various functions of higher layers of the base station device 1420. For example, controller 1421 generates data packets from data in signals processed by the radio communication interface 1425, and transfers the generated packets via the network interface 1423. The controller 1421 can bundle data from multiple baseband processors to generate the bundled packets, and transfer the generated bundled packets. The controller 1421 can have logic functions of performing control such as radio resource control, radio bearer control, mobility management, admission control, and scheduling. This control can be performed in corporation with a gNB or a core network node in the vicinity. The memory 1422 includes a RAM and a ROM, and stores a program that is executed by the controller 1421 and various types of control data (such as a terminal list, transmission power data, and scheduling data).

The network interface 1423 is a communication interface for connecting the base station device 1420 to the core network 1424. The controller 1421 can communicate with a core network node or another gNB via the network interface 1423. In this case, the gNB 1400 and the core network node or other gNBs can be connected to each other through a logical interface (such as an S1 interface and an X2 interface). The network interface 1423 can also be a wired communication interface or a radio communication interface for radio backhaul lines. If the network interface 1423 is a radio communication interface, the network interface 1423 can use a higher frequency band for radio communication than a frequency band used by the radio communication interface 1425.

The radio communication interface 1425 supports any cellular communication schemes (such as Long Term Evolution (LTE) and LTE-Advanced), and provides, via the antenna 1410, radio connection to a terminal located in a cell of the gNB 1400. The radio communication interface 1425 can typically include, for example, a baseband (BB) processor 1426 and a RF circuit 1427. The BB processor 1426 can perform, for example, encoding/decoding, modulation/demodulation, and multiplexing/demultiplexing, and performs various types of signal processing of layers (such as L1, Medium Access Control (MAC), Radio Link Control (RLC), and Packet Data Convergence Protocol (PDCP)).Instead of the controller 1421, the BB processor 1426 can have a part or all of the above-described logic functions. The BB processor 1426 can be a memory that stores a communication control program, or a module that includes a processor configured to execute the program and a related circuit. Updating the program can allow the functions of the BB processor 1426 to be changed. The module can be a card or a blade that is inserted into a slot of the base station device 1420. Alternatively, the module can also be a chip that is mounted on the card or the blade. Meanwhile, the RF circuit 1427 can include, for example, a mixer, a filter, and an amplifier, and transmits and receives radio signals via the antenna 1410. Although FIG. 12 illustrates the example in which one RF circuit 1427 is connected to one antenna 1410, the present disclosure is not limited to thereto; rather, one RF circuit 1427 can connect to a plurality of antennas 1410 at the same time.

As illustrated in FIG. 12, the radio communication interface 1425 can include the multiple BB processors 1426. For example, the multiple BB processors 1426 can be compatible with multiple frequency bands used by gNB 1400. As illustrated in FIG. 12, the radio communication interface 1425 can include the multiple RF circuits 1427. For example, the multiple RF circuits 1427 can be compatible with multiple antenna elements. Although FIG. 12 illustrates the example in which the radio communication interface 1425 includes the multiple BB processors 1426 and the multiple RF circuits 1427, the radio communication interface 1425 can also include a single BB processor 1426 or a single RF circuit 1427.

### Second use case

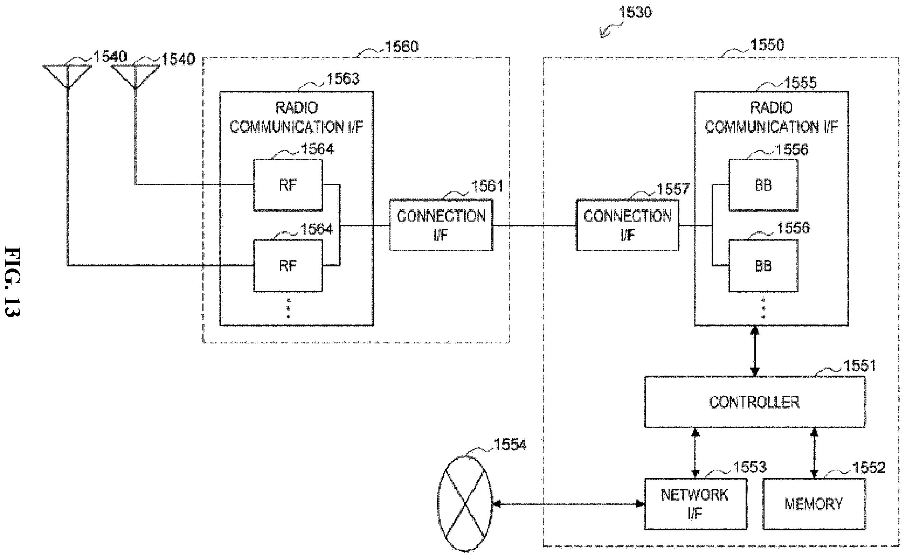

FIG. 13 is a block diagram illustrating a second example of a schematic configuration of a gNB to which the technology in content of the present disclosure is applicable. The gNB 1530 includes a plurality of antennas 1540, a base station device 1550, and an RRH 1560. The RRH 1560 and each antenna 1540 can be connected to each other via an RF cable. The base station device 1550 and the RRH 1560 can be connected to each other via a high speed line such as a fiber optic cable. In one implementation, the gNB 1530 (or base station device 1550) herein can correspond to the electronic devices 300A, 1300A, and/or 1500B described above.

Each of the antennas 1540 includes a single or multiple antenna elements such as multiple antenna elements included in a MIMO antenna and is used for the RRH 1560 to transmit and receive radio signals. As shown in FIG. 13, the gNB 1530 can include multiple antennas 1540. For example, multiple antennas 1540 can be compatible with multiple frequency bands used by the gNB 1530.

The base station device 1550 includes a controller 1551, a memory 1552, a network interface 1553, a radio communication interface 1555, and a connection interface 1557. The controller 1551, the memory 1552, and the network interface 1553 are the same as the controller 1421, the memory 1422, and the network interface 1423 described with reference to FIG. 12.

The radio communication interface 1555 supports any cellular communication scheme (such as LTE and LTE-Advanced) and provides radio communication to terminals positioned in a sector corresponding to the RRH 1560 via the RRH 1560 and the antenna 1540. The radio communication interface 1555 can typically include, for example, a BB processor 1556. The BB processor 1556 is the same as the BB processor 1426 described with reference to FIG. 12, except that the BB processor 1556 is connected to the RF circuit 1564 of the RRH 1560 via the connection interface 1557. As illustrated in FIG. 13, the radio communication interface 1555 can include the multiple BB processors 1556. For example, the multiple BB processors 1556 can be compatible with multiple frequency bands used by gNB 1530. Although FIG. 13 illustrates the example in which the radio communication interface 1555 includes multiple BB processors 1556, the radio communication interface 1555 can also include a single BB processor 1556.

The connection interface 1557 is an interface for connecting the base station device 1550 (radio communication interface 1555) to the RRH 1560. The connection interface 1557 can also be a communication module for communication in the above-described high speed line that connects the base station device 1550 (radio communication interface 1555) to the RRH 1560.

The RRH 1560 includes a connection interface 1561 and a radio communication interface 1563.

The connection interface 1561 is an interface for connecting the RRH 1560 (radio communication interface 1563) to the base station device 1550. The connection interface 1561 can also be a communication module for communication in the above-described high speed line.

The radio communication interface 1563 transmits and receives radio signals via the antenna 1540. The radio communication interface 1563 can typically include, for example, the RF circuitry 1564. The RF circuit 1564 can include, for example, a mixer, a filter, and an amplifier, and transmits and receives radio signals via the antenna 1540. Although FIG. 13 illustrates the example in which one RF circuit 1564 is connected to one antenna 1540, the present disclosure is not limited to thereto; rather, one RF circuit 1564 can connect to a plurality of antennas 1540 at the same time.

As illustrated in FIG. 13, the radio communication interface 1563 can include the multiple RF circuits 1564. For example, the multiple RF circuits 1564 can support multiple antenna elements. Although FIG. 13 illustrates the example in which the radio communication interface 1563 includes the multiple RF circuits 1564, the radio communication interface 1563 can also include a single RF circuit 1564.

### Use cases for the user equipment (terminal)

### First use case

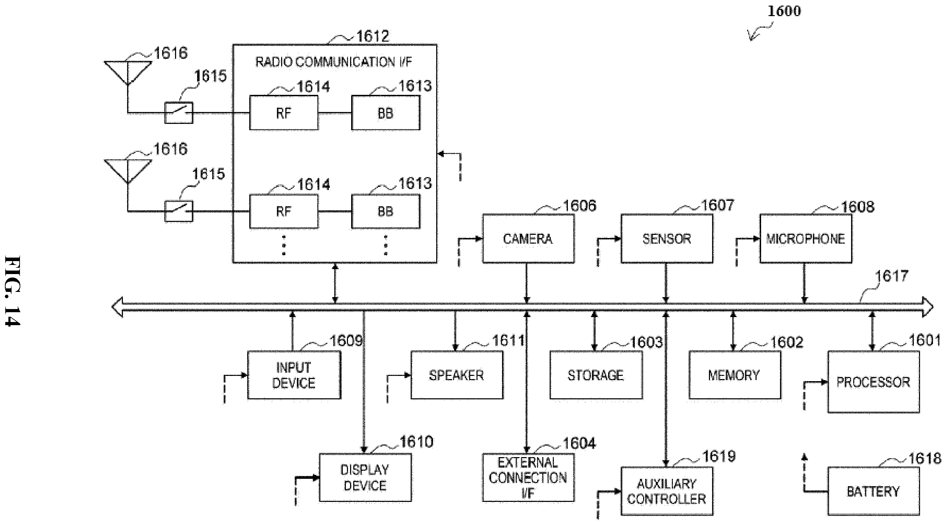

FIG. 14 is a block diagram illustrating an example of a schematic configuration of an intelligent phone 1600 to which the technology of the present disclosure can be applied. A smartphone 1600 includes a processor 1601, a memory 1602, a storage device 1603, an external connection interface 1604, a camera device 1606, a sensor 1607, a microphone 1608, an input device 1609, a display device 1610, a speaker 1611, a radio communication interface 1612, one or more antenna switches 1615, one or more antennas 1616, a bus 1617, a battery 1618, and an auxiliary controller 1619. In an implementation, the smartphone 1600 (or the processor 1601) herein can correspond to the above-described terminal device 300B and/or 1500A.

The processor 1601 can be, for example, a CPU or a system on a chip (SoC), and controls functions of the application layer and other layers of the smartphone 1600. The memory 1602 includes a RAM and a ROM, and stores a program that is executed by the processor 1601. The storage device 1603 can include a storage medium such as a semiconductor memory and a hard disk. The external connection interface 1604 is an interface for connecting an external device (for example, a memory card and a universal serial bus (USB) device) to the smartphone 1600.

The camera device 1606 includes an image sensor (for example, a charge coupled device (CCD) and a complementary metal oxide semiconductor (CMOS)), and generates a captured image. The sensor 1607 can include a set of sensors, such as a measurement sensor, a gyro sensor, a geomagnetic sensor, and an acceleration sensor. The microphone 1608 converts the sound input of the smart phone 1600 into an audio signal. The input device 1609 includes, for example, a touch sensor configured to detect touches on the screen of the display device 1610, a keypad, a keyboard, buttons, or switches, and receives input operations or information of a user. The display device 1610 includes a screen (for example, a liquid crystal display (LCD) and an organic light emitting diode (OLED) display), and displays output images of the smartphone 1600. The speaker 1611 converts output audio signals of the smartphone 1600 into sound.

The radio communication interface 1612 supports any cellular communication scheme (such as LTE, LTE-Advanced, and NR) and performs radio communication. The radio communication interface 1612 can typically include, for example, a BB processor 1613 and an RF circuit 1614. The BB processor 1613 can perform, for example, encoding/decoding, modulation/demodulation, and multiplexing/demultiplexing, and performs various types of signal processing for radio communication. Meanwhile, the RF circuit 1614 can include, for example, a mixer, a filter, and an amplifier, and transmits and receives radio signals via the antenna 1616. The radio communication interface 1612 can be a chip module on which the BB processor 1613 and the RF circuit 1614 are integrated. As shown in FIG. 14, the radio communication interface 1612 can include multiple BB processors 1613 and multiple RF circuits 1614. Although FIG. 14 illustrates the example in which the radio communication interface 1612 includes the multiple BB processors 1613 and the multiple RF circuits 1614, the radio communication interface 1612 can also include a single BB processor 1613 or a single RF circuit 1614.

In addition to a cellular communication scheme, the radio communication interface 1612 can support other types of radio communication schemes, such as a short-range wireless communication scheme, a near-field communication scheme, and a wireless local area network (LAN) scheme. In this case, the radio communication interface 1612 can include the BB processor 1613 and the RF circuit 1614 as to each radio communication scheme.

Each of the antenna switches 1615 switches the connection destination of the antenna 1616 among multiple circuits (for example, circuits for different radio communication schemes) included in the radio communication interface 1612.

Each of the antennas 1616 includes one or more antenna elements (such as multiple antenna elements included in a MIMO antenna), and is used for the radio communication interface 1612 to transmit and receive radio signals. As shown in FIG. 14, the smartphone 1600 can include multiple antennas 1616. Although FIG. 14 illustrates an example in which the smartphone 1600 includes multiple antennas 1616, the radio communication interface 1600 can alternatively include a single antenna 1616.

In addition, the smartphone 1600 can include the antennas 1616 for every radio communication scheme. In this case, the antenna switch 1615 can be removed from configuration of the smartphone 1600.

The bus 1617 connects the processor 1601, the memory 1602, the storage device 1603, the external connection interface 1604, the camera device 1606, the sensor 1607, the microphone 1608, the input device 1609, the display device 1610, the speaker 1611, the radio communication interface 1612, and the auxiliary controller 1619. The battery 1618 provides power for various blocks of the smartphone 1600 illustrated in FIG. 14 via feeders, and the feeders are partially expressed as dashed lines in the figure. The auxiliary controller 1619, for example, operates the minimum necessary functions of the smartphone 1600 in sleep mode.

### Second use case

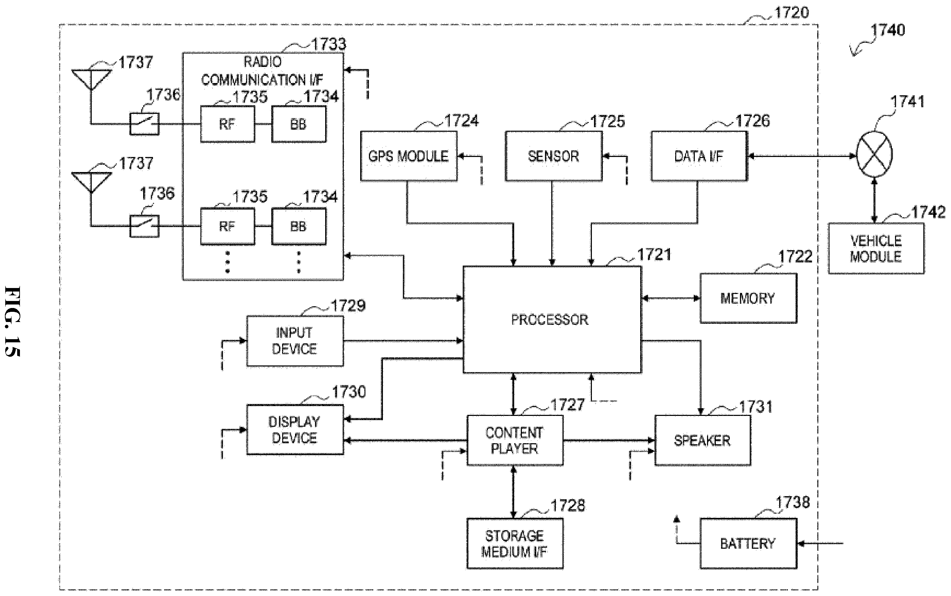

FIG. 15 is a block diagram illustrating an example of a schematic configuration of a car navigation device 1720 to which the technology of the present disclosure can be applied.A car navigation device 1720 includes a processor 1721, a memory 1722, a global positioning system (GPS) 1724, a sensor 1725, a data interface 1726, a content player 1727, a storage medium interface 1728, an input device 1729, a display device 1730, a speaker 1731, a radio communication interface 1733, one or more antenna switches 1736, one or more antennas 1737, and a battery 1738. In an implementation, the car navigation device 1720 (or the processor 1721) herein can correspond to the above-described terminal device 300B and/or 1500A.

The processor 1721 can be, for example, a CPU or a SoC, and controls the navigation function and other functions of the car navigation device 1720. The memory 1722 includes a RAM and a ROM, and stores a program that is executed by the processor 1721.

The GPS module 1724 performs measurement on a location (such as a latitude, a longitude, and an altitude) of the car navigation device 1720 by using GPS signals received from GPS satellites. The sensor 1725 can include a set of sensors, such as a gyro sensor, a geomagnetic sensor, and an air pressure sensor. The data interface 1726 is connected to, for example, an in-vehicle network 1741 via a terminal not shown, and acquires data generated by the vehicle (such as vehicle speed data).

The content player 1727 plays back content stored in a storage medium (such as a CD and a DVD), which is inserted into the storage medium interface 1728. The input device 1729 includes, for example, a touch sensor configured to detect touches on the screen of the display device 1730, buttons, or switches, and receives input operations or information of a user. The display device 1730 includes a screen, for example, an LCD or OLED screen, and displays images for the navigation function or playback content. The speaker 1731 outputs the sound for the navigation function or playback content.

The radio communication interface 1733 supports any cellular communication scheme (such as LTE, LTE-Advanced, and NR) and performs radio communication. The radio communication interface 1733 can typically include, for example, a BB processor 1734 and an RF circuit 1735. The BB processor 1734 can perform, for example, encoding/decoding, modulation/demodulation, and multiplexing/demultiplexing, and performs various types of signal processing for radio communication. Meanwhile, the RF circuit 1735 can include, for example, a mixer, a filter, and an amplifier, and transmits and receives radio signals via the antenna 1737. The radio communication interface 1733 can alternatively be a chip module on which the BB processor 1734 and the RF circuit 1735 are integrated. As shown in FIG. 15, the radio communication interface 1733 can include multiple BB processors 1734 and multiple RF circuits 1735. Although FIG. 15 illustrates the example in which the radio communication interface 1733 includes the multiple BB processors 1734 and the multiple RF circuits 1735, the radio communication interface 1733 can also include a single BB processor 1734 or a single RF circuit 1735.

In addition to a cellular communication scheme, the radio communication interface 1733 can support other types of radio communication schemes, such as a short-range wireless communication scheme, a near-field communication scheme, and a wireless LAN scheme. In this case, the radio communication interface 1733 can include the BB processor 1734 and the RF circuit 1735 as to each radio communication scheme.

Each of the antenna switches 1736 switches the connection destination of the antenna 1737 among multiple circuits (for example, circuits for different radio communication schemes) included in the radio communication interface 1733.

Each of the antennas 1737 includes one or more antenna elements (such as multiple antenna elements included in a MIMO antenna), and is used for the radio communication interface 1733 to transmit and receive radio signals. As shown in FIG. 15, the car navigation device 1720 can include multiple antennas 1737. Although FIG. 15 illustrates an example in which the car navigation device 1720 includes multiple antennas 1737, the car navigation device 1720 can alternatively include a single antenna 1737.

In addition, the car navigation device 1720 can include the antenna 1737 for every radio communication scheme. In this case, the antenna switch 1736 can be removed from configuration of the car navigation device 1720.

The battery 1738 provides power for various blocks of the car navigation device 1720 illustrated in FIG. 15 via feeders, and the feeders are partially expressed as dashed lines in the figure. The battery 1738 accumulates power supplied by the vehicle.

The technology of the present disclosure can also be implemented as an in-vehicle system (or vehicle) 1740 including one or more blocks of the car navigation device 1720, the in-vehicle network 1741, and a vehicle module 1742.The vehicle module 1742 generates vehicle data (such as vehicle speed, engine speed, and failure information), and outputs the generated data to the in-vehicle network 1741.

The exemplary embodiments of the present disclosure have been described above with reference to the drawings, but the present disclosure is of course not limited to the above examples. Those skilled in the art can obtain various changes and modifications within the scope of the appended claims, and it should be understood that these changes and modifications will naturally fall within the technical scope of the present disclosure.

For example, a plurality of functions included in one unit in the above embodiments can be implemented by separate devices. Alternatively, the multiple functions implemented by the multiple units in the above embodiments can be implemented by separate devices, respectively. In addition, one of the above functions can be realized by multiple units. Needless to say, such a configuration is included in the technical scope of the present disclosure.

In this specification, the steps described in the flowchart include not only processes performed in time series in the described order, but also processes performed in parallel or individually rather than necessarily in time series. In addition, even in the steps processed in time series, needless to say, the order can be changed appropriately.

Example embodiments of the present disclosure can be implemented in the manners described in the following clauses:
1. An electronic device for a first terminal device, where the electronic device includes a processing circuit, and the processing circuit is configured to:
   search for time-frequency resources based on at least two allocation modes to obtain a candidate resource set;
   select a time-frequency resource from the candidate resource set;
   notify a second terminal device of the selected time-frequency resource to be used for sidelink communication with the second terminal device; and
   send resource selection information to a base station, where the resource selection information indicates whether a specified resource is selected.
1. An electronic device, comprising a processing circuit configured to:
   initiate a plurality of listen before talk (LBT) procedures on a plurality of beams;
   for an LBT procedure on a first beam of the plurality of beams, determine that a first threshold number of successful clear channel assessment (CCA) detections have been completed;
   for an LBT procedure on at least one other beam of the plurality of beams, determine that a corresponding threshold number of successful CCA detections have not been completed; and
   determine whether at least one additional CCA detection is to be performed on the first beam.
2. The electronic device of clause 1,
   where the initiating the plurality of LBT procedures includes generating a corresponding random number for each of the plurality of beams, where the random number defines a threshold number of successful CCA detections to be included in an LBT procedure for a corresponding beam, and
   where the processing circuit is further configured to set a value of a CCA counter of the corresponding beam to be equal to the random number, where one successful CCA detection on the beam decreases the value of the CCA counter by 1.
3. The electronic device of clause 2,
   where the determining that the first threshold number of successful CCA detections have been completed includes determining that a value of a CCA counter of the first beam is 0; and/or
   where for the LBT procedure on the at least one other beam, the determining that the corresponding threshold number of successful CCA detections have not been completed includes determining that a value of a CCA counter of the at least one other beam is not 0; and/or
   where the determining that at least one additional CCA detection is to be performed on the first beam includes increasing the value of the CCA counter of the first beam by N, where N≥1.
4. The electronic device of clause 2,
   where, for the LBT procedure on the at least one other beam, it is determined, based on one of the following, that the corresponding threshold number of successful CCA detections have not been completed:
   a ratio of the number of beams with a CCA counter value of 0 to the total number of the plurality of beams is less than 1; or
   a sum of CCA counter values of the plurality of beams is greater than 0.
5. The electronic device of clause 2, where the processing circuit is further configured to:
   based on sensing within a first window, group a first subset of the plurality of beams into a first group; and
   assign a value of a CCA counter of a second beam in the first subset to a common CCA counter of the first group, where the common CCA counter takes priority over individual CCA counters of members of the first subset, and concurrent successful CCA detections for the members of the first subset decrease the value of the common CCA counter by 1.
6. The electronic device of clause 5, where
   the first subset includes at least two beams with similar channel conditions;
   the first subset includes at least two beams with similar CCA counter values; or
   the first subset includes at least two beams with diverse CCA counter values.
7. The electronic device of clause 5, where the second beam is a member with a largest CCA counter value in the first subset.
8. The electronic device of clause 5, where the processing circuit is further configured to:
   based on sensing within a second window, update the first group to include a second subset of the plurality of beams; and
   assign a value of a CCA counter of a third beam in the second subset to the common CCA counter of the first group.
9. The electronic device of clause 3, where the processing circuit is further configured to:
   record a number of times of increasing a value of a counter of any one beam of the plurality of beams;
   when the number of times reaches a second threshold, end the plurality of LBT procedures; and perform multi-beam transmission without using a beam for which the LBT procedure has not been completed.
10. The electronic device of clause 1, where the plurality of beams include a plurality of downlink beams, and the electronic device can be implemented as at least a portion of a base station.
11. The electronic device of clause 1, where the plurality of beams include a plurality of uplink beams, and the electronic device can be implemented as at least a portion of a terminal device.
12. A method for wireless communication, including:
   initiating a plurality of listen before talk (LBT) procedures on a plurality of beams;
   for an LBT procedure on a first beam of the plurality of beams, determining that a first threshold number of successful clear channel assessment (CCA) detections have been completed;
   for an LBT procedure on at least one other beam of the plurality of beams, determining that a corresponding threshold number of successful CCA detections have not been completed; and determining whether at least one additional CCA detection is to be performed on the first beam.
13. The method of clause 12,
   where the initiating the plurality of LBT procedures includes generating a corresponding random number for each of the plurality of beams, where the random number defines a threshold number of successful CCA detections to be included in an LBT procedure for a corresponding beam, and
   where the method further includes: setting a value of a CCA counter of the corresponding beam to be equal to the random number, where one successful CCA detection on the beam decreases the value of the CCA counter by 1.
14. The method of clause 13,
   where the determining that the first threshold number of successful CCA detections have been completed includes determining that a value of a CCA counter of the first beam is 0; and/or
   where for the LBT procedure on the at least one other beam, the determining that the corresponding threshold number of successful CCA detections have not been completed includes determining that a value of a CCA counter of the at least one other beam is not 0; and/or
   where the determining that at least one additional CCA detection is to be performed on the first beam includes increasing the value of the CCA counter of the first beam by N, where N≥1.
15. The method of clause 13,
   where, for the LBT procedure on the at least one other beam, it is determined, based on one of the following, that the corresponding threshold number of successful CCA detections have not been completed:
   a ratio of the number of beams with a CCA counter value of 0 to the total number of the plurality of beams is less than 1; or
   a sum of CCA counter values of the plurality of beams is greater than 0.
16. The method of clause 13, further including:
   based on sensing within a first window, grouping a first subset of the plurality of beams into a first group; and
   assigning a value of a CCA counter of a second beam in the first subset to a common CCA counter of the first group, where the common CCA counter takes priority over individual CCA counters of members of the first subset, and concurrent successful CCA detections for the members of the first subset decrease the value of the common CCA counter by 1.
17. The method of clause 16, further including:
   based on sensing within a second window, updating the first group to include a second subset of the plurality of beams; and
   assigning a value of a CCA counter of a third beam in the second subset to the common CCA counter of the first group.
18. The method of clause 12, further including:
   recording the number of times of increasing a value of a counter of any one beam of the plurality of beams;
   when a number of times reaches a second threshold, ending the plurality of LBT procedures; and
   performing multi-beam transmission without using a beam for which the LBT procedure has not been completed.
19. A computer-readable storage medium having executable instructions stored thereon, wherein the executable instructions, when executed by one or more processors, cause operations of the method according to any one of clauses 12 to 18 to be implemented.
20. A computer program product comprising instructions, wherein the instructions, when executed by a computer, cause the computer to perform the method according to any one of clauses 12 to 18.

Although the present disclosure and its advantages have been described in detail, it should be understood that various modifications, replacements, and changes can be made without departing from the spirit and scope of the present disclosure as defined by the appended claims. Moreover, terms "comprise", "include", or any other variations thereof are intended to cover non-exclusive inclusions, so that processes, methods, articles or devices containing a series of elements not only contain these elements, but also contain other elements which are not clearly listed, or further contain elements which are inherent to these processes, methods, articles or devices. Under the condition of no more limitations, an element defined by the statement "including ..." does not exclude existence of the same other elements in a process, method, articles or device including the element.

## Claims

1. An electronic device, comprising a processing circuit configured to:
initiate a plurality of listen before talk (LBT) procedures on a plurality of beams;
for an LBT procedure on a first beam of the plurality of beams, determine that a first threshold number of successful clear channel assessment (CCA) detections have been completed;
for an LBT procedure on at least one other beam of the plurality of beams, determine that a corresponding threshold number of successful CCA detections have not been completed; and
determine whether at least one additional CCA detection is to be performed on the first beam.

2. The electronic device according to claim 1,
wherein the initiating the plurality of LBT procedures comprises generating a corresponding random number for each of the plurality of beams, wherein the random number defines a threshold number of successful CCA detections to be comprised in an LBT procedure for a corresponding beam, and
wherein the processing circuit is further configured to set a value of a CCA counter of the corresponding beam to be equal to the random number, wherein one successful CCA detection on the beam decreases the value of the CCA counter by 1.

3. The electronic device according to claim 2,
wherein the determining that the first threshold number of successful CCA detections have been completed comprises determining that a value of a CCA counter of the first beam is 0; and/or
wherein for the LBT procedure on the at least one other beam, the determining that the corresponding threshold number of successful CCA detections have not been completed comprises determining that a value of a CCA counter of the at least one other beam is not 0; and/or
wherein the determining that at least one additional CCA detection is to be performed on the first beam comprises increasing the value of the CCA counter of the first beam by N, wherein N≥1.

4. The electronic device according to claim 2,
wherein, for the LBT procedure on the at least one other beam, it is determined, based on one of the following, that the corresponding threshold number of successful CCA detections have not been completed:
a ratio of the number of beams with a CCA counter value of 0 to the total number of the plurality of beams is less than 1; or
a sum of CCA counter values of the plurality of beams is greater than 0.

5. The electronic device according to claim 2, wherein the processing circuit is further configured to:
based on sensing within a first window, group a first subset of the plurality of beams into a first group; and
assign a value of a CCA counter of a second beam in the first subset to a common CCA counter of the first group, wherein the common CCA counter takes priority over individual CCA counters of members of the first subset, and concurrent successful CCA detections for the members of the first subset decrease the value of the common CCA counter by 1.

6. The electronic device according to claim 5, wherein
the first subset comprises at least two beams with similar channel conditions;
the first subset comprises at least two beams with similar CCA counter values; or
the first subset comprises at least two beams with diverse CCA counter values.

7. The electronic device according to claim 5, wherein the second beam is a member with a largest CCA counter value in the first subset.

8. The electronic device according to claim 5, wherein the processing circuit is further configured to:
based on sensing within a second window, update the first group to comprise a second subset of the plurality of beams; and
assign a value of a CCA counter of a third beam in the second subset to the common CCA counter of the first group.

9. The electronic device according to claim 3, wherein the processing circuit is further configured to:
record a number of times of increasing a value of a counter of any one beam of the plurality of beams;
when the number of times reaches a second threshold, end the plurality of LBT procedures; and
perform multi-beam transmission without using a beam for which the LBT procedure has not been completed.

10. The electronic device according to claim 1, wherein the plurality of beams comprise a plurality of downlink beams, and the electronic device can be implemented as at least a portion of a base station.

11. The electronic device according to claim 1, wherein the plurality of beams comprise a plurality of uplink beams, and the electronic device can be implemented as at least a portion of a terminal device.

12. A method for wireless communication, comprising:
initiating a plurality of listen before talk (LBT) procedures on a plurality of beams;
for an LBT procedure on a first beam of the plurality of beams, determining that a first threshold number of successful clear channel assessment (CCA) detections have been completed;
for an LBT procedure on at least one other beam of the plurality of beams, determining that a corresponding threshold number of successful CCA detections have not been completed; and
determining whether at least one additional CCA detection is to be performed on the first beam.

13. The method according to claim 12,
wherein the initiating the plurality of LBT procedures comprises generating a corresponding random number for each of the plurality of beams, wherein the random number defines a threshold number of successful CCA detections to be comprised in an LBT procedure for a corresponding beam, and
wherein the method further comprises setting a value of a CCA counter of the corresponding beam to be equal to the random number, wherein one successful CCA detection on the beam decreases the value of the CCA counter by 1.

14. The method according to claim 13,
wherein the determining that the first threshold number of successful CCA detections have been completed comprises determining that a value of a CCA counter of the first beam is 0; and/or
wherein for the LBT procedure on the at least one other beam, the determining that the corresponding threshold number of successful CCA detections have not been completed comprises determining that a value of a CCA counter of the at least one other beam is not 0; and/or
wherein the determining that at least one additional CCA detection is to be performed on the first beam comprises increasing the value of the CCA counter of the first beam by N, wherein N≥1.

15. The method according to claim 13,
wherein, for the LBT procedure on the at least one other beam, it is determined, based on one of the following, that the corresponding threshold number of successful CCA detections have not been completed:
a ratio of the number of beams with a CCA counter value of 0 to the total number of the plurality of beams is less than 1; or
a sum of CCA counter values of the plurality of beams is greater than 0.

16. The method according to claim 13, further comprising:
based on sensing within a first window, grouping a first subset of the plurality of beams into a first group; and
assigning a value of a CCA counter of a second beam in the first subset to a common CCA counter of the first group, wherein the common CCA counter takes priority over individual CCA counters of members of the first subset, and concurrent successful CCA detections for the members of the first subset decrease the value of the common CCA counter by 1.

17. The method according to claim 16, further comprising:
based on sensing within a second window, updating the first group to comprise a second subset of the plurality of beams; and
assigning a value of a CCA counter of a third beam in the second subset to the common CCA counter of the first group.

18. The method according to claim 12, further comprising:
recording a number of times of increasing a value of a counter of any one beam of the plurality of beams;
when the number of times reaches a second threshold, ending the plurality of LBT procedures; and
performing multi-beam transmission without using a beam for which the LBT procedure has not been completed.

19. A computer-readable storage medium having executable instructions stored thereon, wherein the executable instructions, when executed by one or more processors, cause operations of the method according to any one of claims 12 to 18 to be implemented.

20. A computer program product comprising instructions, wherein the instructions, when executed by a computer, cause the computer to perform the method according to any one of claims 12 to 18.
